(19) Europäisches Patentamt
European Patent Office
Office européen des brevets

(11) Veröffentlichungsnummer: **0 253 770**
**B1**

(12) # EUROPÄISCHE PATENTSCHRIFT

(45) Veröffentlichungstag der Patentschrift: **20.06.90**

(51) Int. Cl.⁵: **C07F 7/18,** C08K 5/54, C08L 75/04, C09J 163/00, C09J 175/00

(21) Anmeldenummer: **87810389.4**

(22) Anmeldetag: **08.07.87**

(54) **Neue Oxazolidine.**

(30) Priorität: **14.07.86 CH 2817/86**

(43) Veröffentlichungstag der Anmeldung: **20.01.88 Patentblatt 88/3**

(45) Bekanntmachung des Hinweises auf die Patenterteilung: **20.06.90 Patentblatt 90/25**

(84) Benannte Vertragsstaaten: **CH DE ES FR GB IT LI NL SE**

(56) Entgegenhaltungen: **FR-A- 2 269 532**

(73) Patentinhaber: **CIBA-GEIGY AG, Klybeckstrasse 141, CH-4002 Basel(CH)**

(72) Erfinder: **Mülhaupt, Rolf, Dr., Chemin de la Prairie 2, CH-1723 Marly(CH)**
Erfinder: **Simon, Hubert, Dr., Rue de Bâle 213, F-68100 Mulhouse(FR)**

EP 0 253 770 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft die Verwendung neuer silangruppenhaltiger 1,3-Oxazolidine als Haftvermittler, sowie feuchtigkeitshärtende Epoxidharz- oder Polyurethanharze, welche diese Haftvermittler enthalten, ein Verfahren zur Härtung von Epoxid- oder Polyurethanharzen in Gegenwart dieser Haftvermittler, sowie die Herstellung von Klebstoffen, Dichtungsmassen, Lacken oder Isolierstoffen aus Epoxid- oder Polyurethanharzen in Gegenwart dieser Haftvermittler.

1,3-Oxazolidine sind z.B. in der US-PS 3,743,626 als Härtungsmittel für feuchtigkeitshärtende Polyurethan-Präpolymere beschrieben worden.

Solche Präpolymere sind seit langer Zeit als Klebstoffe, Dichtungsstoffe, Anstrichstoffe oder Isolierstoffe bekannt. Die Härtbarkeit dieser Präpolymere beruht auf ihrem Gehalt an freien Isocyanatgruppen, wodurch unter Feuchtigkeitseinwirkung die Aushärtung eintritt. Die Haftung der ausgehärteten Polyurethane auf Glas oder Metall ist in vielen technischen Anwendungen unbefriedigend, was zum Einsatz von Grundiermitteln ("Primer") führte. Damit wird ein guter Verbund zwischen Polyurethan und Glas oder Metall erreicht, der auch durch hohe Feuchtigkeit, erhöhte Temperaturen und hohe mechanische Belastung wenig beeinträchtigt wird. Als Primer haben sich z.B. Aminoalkyl-alkoxysilane bewährt (vgl. Plueddemann et al. "Silan coupling agents", Plenum Press, NY [1982]). Allerdings sind die wirksamsten Aminosilan-Haftvermittler als eingebaute Haftvermittler in feuchtigkeitshärtenden Polyurethanen unmodifiziert nicht zu verwenden, da die Aminogruppen mit Isocyanatgruppen abreagieren. Daher sind in der DE-OS 3 414 877 Ketimine und Aldimine von Aminoalkylsilanen beschrieben worden, welche Polyurethan-Klebstoffen zugesetzt werden können, ohne deren Lagerstabilität zu beeinträchtigen.

Ferner sind aus der FR-A 2 269 532 Organosilane mit Imidazolidinreseten als Haftvermittler bekannt, welche entweder in das Harz eingearbeitet oder als Primer verwendet werden.

Es wurde nun eine Klasse von Verbindungen gefunden, die feuchtigkeitshärtenden Polyurethan- und Epoxidharz-Klebstoffen, Dichtungsmassen, -Lacken sowie Isolierstoffen zugesetzt werden, wobei keine Gelierung erfolgt und eine signifikant erhöhte Haftung auf Glas, Metall sowie Kunststoffen, wie glasfaserverstärken Kunststoffen erzielt wird. Diese bleibt auch nach mehrwöchigem Lagern bei 60°C in Wasser erhalten. Es kann dabei auf die Vorbehandlung mit einem Primer verzichtet werden, was die Einsparung eines getrennten, zusätzlichen Arbeitsvorganges bedeutet. Diese Befunde sind überraschend, da der Zusatz des in fast allen Harzen angewendeten Glycidyloxypropyl-trimethoxysilans (wie z.B. in der EP-A 194 742 beschrieben) zu Polyurethan eine deutlich schwächere Haftvermittlung ergibt.

Die vorliegende Erfindung betrifft Verbindungen der allgemeinen Formel I

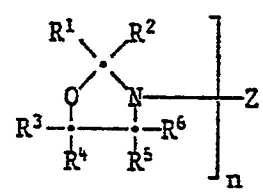

(I),

worin

$R^1$ Wasserstoff, $C_1$–$C_{12}$-Alkyl, $C_5$–$C_7$-Cycloalkyl, Phenyl oder Benzyl ist und

$R^2$ Wasserstoff oder $C_1$–$C_4$-Alkyl bedeutet, oder

$R^1$ und $R^2$ zusammen mit dem C-Atom, an welches sie gebunden sind einen 5– oder 6–gliedrigen Ring bilden, und $R^3$, $R^4$, $R^5$ und $R^6$ gleich oder verschieden sind und Wasserstoff, $C_1$–$C_{12}$–Alkyl, unsubstituiertes oder mit 1–3 $C_1$–$C_4$-Alkyl, Halogen oder $C_1$–$C_4$-Alkoxy substituiertes Phenyl oder eine Gruppe der Formel $-CH_2OR^7$ (II) bedeuten, wobei $R^7$ $C_1$–$C_{12}$-Alkyl, unsubstituiertes oder mit 1–3 $C_1$–$C_4$-Alkyl, Halogen oder $C_1$–$C_4$-Alkoxy substituiertes Phenyl oder -C(O)-$R^8$ ist, und $R^8$ $C_1$-$C_{12}$-Alkyl bedeutet, und ferner höchstens zwei, vorzugsweise einer der Reste $R^3$, $R^4$, $R^5$ und $R^6$ eine oder zwei Gruppen der Formel $-CH_2CH_2Si(OR^9)_3$ (III), $-CH_2OC(O)CH_2CH_2Si(OR^9)_3$ (IV), $-CH_2O(C_mH_{2m})Si(OR^9)_3$ (V) oder

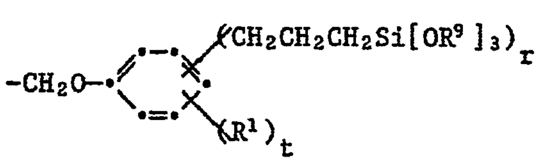

(VI) bedeuten, wobei

$R^9$ $C_1$-$C_4$-Alkyl oder Phenyl ist und m eine Zahl 1 bis 8 und r eine Zahl 1 oder 2, sowie t 0, 1 oder 2 bedeuten, und $R^1$ die oben angegebene Bedeutung hat, und ausserdem Verbindungen der Formel I, worin $R^4$ und $R^5$ zusammen eine Gruppe der Formel

$$\begin{array}{l} -CH_2CH_2CHCH_2- \\ \qquad\qquad | \\ \qquad\quad CH_2CH_2Si(OR^9)_3 \end{array} \quad (VII)$$

ergeben, worin $R^9$ die oben angegebene Bedeutung hat, und $R^3$ und $R^6$ für diesen Fall Wasserstoff bedeuten, und

n 1 oder 2 bedeutet, und

Z, falls n 1 ist, ein organischer Rest ist, der sich von einem primären Amin $ZNH_2$ ableitet und gegebenenfalls eine oder zwei Gruppen $-Si(OR^9)_3$ enthält und

Z, falls n 2 ist, ein zweiwertiger organischer Rest ist, der sich von einem primären Diamin $H_2NZNH_2$ ableitet; mit der Massgabe, dass die Verbindungen der Formel I eine bis drei Gruppen $-Si(OR^9)_3$ enthalten.

Sind $R^1$, $R^3$, $R^4$, $R^5$, $R^6$, $R^7$ und $R^8$ $C_1$-$C_{12}$-Alkyl, bevorzugt $C_1$-$C_4$-Alkyl, so handelt es sich beispielsweise um Methyl, Ethyl, n-Propyl, Isopropyl, n-Butyl, Isobutyl, t.-Butyl, n-Pentyl, n-Hexyl, geradkettiges oder verzweigtes Octyl, Nonyl, Decyl, Undecyl oder Dodecyl.

Die bevorzugte Bedeutung von $R^3$, $R^4$, $R^5$ und $R^6$ als Alkyl ist Methyl. Besonders bevorzugt sind Verbindungen der Formel I, worin $R^3$, $R^4$, $R^5$ und $R^6$ Wasserstoff, $C_1$-$C_4$-Alkyl, und höchstens zwei dieser Reste Phenoxymethyl sind und insbesondere Verbindungen, worin $R^3$ und $R^6$ Wasserstoff und $R^4$ und $R^5$ Methyl sind.

Kommen die Symbole $R^3$, $R^4$, $R^5$ und $R^6$ in Verbindungen mit n=2 zweimal vor, so haben diese beiden Reste bevorzugt jeweils die gleiche Bedeutung.

Bedeuten $R^2$ und $R^9$ $C_1$-$C_4$-Alkyl, so können sie beispielsweise Methyl, Ethyl, n-Propyl, Isopropyl, n-Butyl, Isobutyl oder t.-Butyl darstellen.

Bedeutet $R^1$ $C_5$-$C_7$-Cycloalkyl, so handelt es sich vorzugsweise um Cyclopentyl oder Cyclohexyl.

In bevorzugten Verbindungen sind $R^1$ und $R^2$ unabhängig voneinander Wasserstoff oder $C_1$-$C_4$-Alkyl, und insbesondere ist einer der Reste $R^1$ und $R^2$ Wasserstoff und der andere $C_1$-$C_4$-Alkyl.

Sind $R^3$, $R^4$, $R^5$, $R^6$ und $R^7$ substituiertes Phenyl, so kommen z.B. die Reste o-, m- oder p-Methylphenyl, 2,4-Dimethylphenyl, 2,4,6-Trimethylphenyl, p-Ethylphenyl, p-t.-Butylphenyl, 2-Chlorphenyl oder 4-Methoxyphenyl in Frage.

Der Rest Z, falls n 1 ist, leitet sich von einem primären Amin ab. Gemäss der vorliegenden Erfindung ist die Bedeutung von Z im primären Amin $ZNH_2$ von untergeordneter Wichtigkeit. Es versteht sich von selbst, dass der Fachmann Amine auswählt, in welchen Z im Oxazolidin der Formel I in Abwesenheit von Feuchtigkeit nicht mit dem Präpolymer reagiert, und damit der erfindungsgemässe Haftvermittler in der Lage ist, mit dem Präpolymer lagerstabile Mischungen einzugehen.

Bevorzugte Verbindungen entsprechen der Formel I, worin Z falls n 1 ist von einem aliphatischen, cycloaliphatischen, aliphatisch/aromatischen, aromatischen oder heterocyclischen primären Amin abgeleitet ist, wobei dieser geradkettige oder verzweigte Rest Z gegebenenfalls eine oder mehrere Ester-, Ether-, Urethan-, Thiourethan-, Aldimin- oder Ketimin-Funktionen enthalten kann.

Besonders bevorzugte Verbindungen entsprechen der Formel I, worin Z, falls n 1 ist, von einem aliphatischen oder gemischt aliphatisch/aromatischen primären Amin abgeleitet ist, wobei dieser Rest Z gegebenenfalls gesamthaft eine oder zwei Ester-, Ether-, Urethan-, Thiourethan-, Aldimin- oder Ketimin-Funktionen enthält oder von einem aromatischen Amin abgeleitet ist.

Enthalten die Verbindungen der Formel I einen Rest Z mit einer oder mehreren, bevorzugt einer oder zwei und besonders bevorzugt mit einer Esterfunktion, so ist die dem Oxazolidinring am nächsten stehende Esterfunktion bevorzugt über Alkylen und den Estersauerstoff an den Oxazolidin-Stickstoff gebunden.

Besitzt Z in den Verbindungen der Formel I Ethersauerstoffe, so kann es sich um Monoether oder Oligoether, wie z.B. eine Gruppe der Formel $(CH[CH_3]-CH_2-O)_y$ oder $(CH_2CH_2CH_2CH_2-O)_y$ handeln, wobei y eine Zahl 1-20, vorzugsweise 1-8 bedeutet.

Sind im Rest Z in den Verbindungen der Formel I Carbamat- oder Thiocarbamat-Gruppen enthalten, so handelt es sich um Derivate, welche durch Umsetzung von N-Hydroxyalkyloxazolidinen mit Isocyanat- bzw. Isothiocyanat-Gruppen enthaltenden Verbindungen erhältich sind. Es sind auch Reste darunter zu verstehen, welche sowohl eine Urethan- als auch eine Thiourethangruppe enthalten, etwa solche, welche ein Brückenglied der Formel

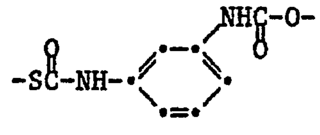

und ähnliche enthalten.

Enthält der Rest Z in den Verbindungen der Formel I Aldimin- oder Ketiminfunktionen, so handelt es sich etwa um solche, wie sie in der DE-OS 34 14 877 beschrieben sind, so z.B. um die Gruppe $-N=C(CH_3)_2$. Unter diese Kategorie von Substituenten fällt auch beispielsweise ein von einem Jeffamin® abgeleiteter Rest der Formel

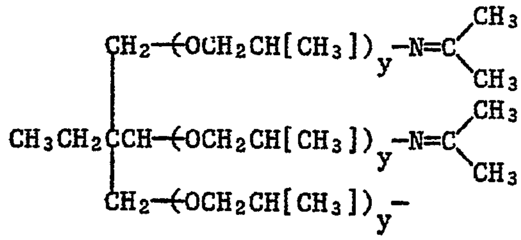

In bevorzugten Verbindungen der Formel I enthält der Rest Z zwei, in besonders bevorzugten Verbindungen eine Ester-, Carbamat-, Thiocarbamat-, Aldimin- oder Ketimin-Funktion. Dabei stellen die Etherfunktionen eine gewisse Ausnahme dar, da sie, wie oben angezeigt wurde, in der Lage sind, Oligoether-Brückenglieder zu bilden. Solche Verbindungen können daher bis zu 20, bevorzugt bis zu 8 Etherfunktionen enthalten. Im Falle von Resten mit mehreren unabhhängigen Oligoether-Brückengliedern, wie z.B. das oben beschriebene Jeffamin®-Derivat, können solche Verbindungen gar noch mehr Etherfunktionen im Rest Z enthalten.

Es ist ein erfindungswesentliches Merkmal, dass die Verbindungen der Formel I eine bis drei Gruppen $-Si(OR^9)_3$ enthalten. Wie oben definiert, enthält der Rest Z, falls n 1 ist, keine, eine oder zwei Silangruppen, und höchstens zwei, bevorzugt einer der Substituenten $R^3$, $R^4$, $R^5$ und $R^6$, falls n 1 ist, enthält zwei, bevorzugt eine Silangruppe. In Verbindungen der Formel I, worin n 2 ist, sind von den gesamthaft in Molekül vorhandenen Resten $R^3$, $R^4$, $R^5$ und $R^6$ höchstens eine oder zwei Silangruppen-substituiert, wobei - wie oben erwähnt -symmetrische Verbindungen bevorzugt werden.

Z in Verbindungen mit n=2, ist als organischer Rest ein aliphatischer, cycloaliphatischer, aromatischer oder Heteroatom enthaltender Rest. Beispielsweise dafür sind die Gruppe $-(C_vH_{2v})-$, wobei v 1-20 sein kann, 1,4-Cyclohexylen, 1,4-Phenylen, 1,3-Phenylen oder aminoterminierte Polyether und andere Reste, die sich von einem diprimären Diamin $H_2NZNH_2$ ableiten.

Besonders bevorzugt werden Verbindungen, welche eine oder zwei Silangruppen enthalten.

Befindet sich eine Silangruppe im Rest Z, so handelt es sich bevorzugt um Verbindungen der Formel I, worin Z eine Gruppe der Formel

$-(C_mH_{2m})-Si(OR^9)_3$ (VIII), oder

$-[(R^{10})C(R^{11})]_u-O-R^{12}$ (IX) , $-(R^{10})C(R^{11})C(O)O(CH_2)_3Si(OR^9)_3$ (X) bedeutet, worin u 2, 3 oder 4 bedeutet, und

$R^{10}$ und $R^{11}$ Wasserstoff oder Methyl sind, und $R^{12}$ eine Gruppe der Formel $-(C_mH_{2m})-Si(OR^9)_3$ (XI), $-C(O)CH_2CH_2Si(OR^9)_3$ (XII), $-C(O)NH-(C_mH_{2m})-Si(OR^9)_3$ (XIII),

Formel $-(C_mH_{2m})-Si(OR^9)_3$ (XI), $-C(O)CH_2CH_2Si(OR^9)_3$ (XII),
$-C(O)NH-(C_mH_{2m})-Si(OR^9)_3$ (XIII),

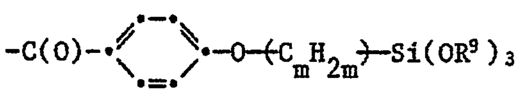 (XIV),

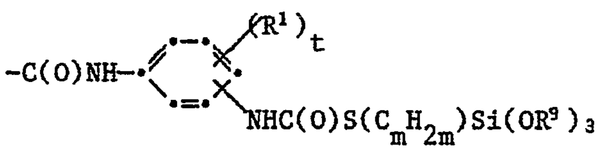 (XV) oder

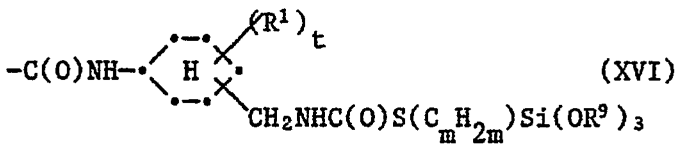 (XVI)

bedeutet, wobei die Symbole m, t, $R^1$ und $R^9$ die oben angegebene Bedeutung haben.

Dabei sind Verbindungen, in welchen $R^{10}$ und $R^{11}$ Wasserstoff sind, bevorzugt.

u bedeutet 2, 3 oder 4, wobei 2 bevorzugt ist.

m ist 1 bis 8, bevorzugt 2 bis 4 und besonders bevorzugt 3.

t bedeutet 0, 1 oder 2 und bevorzugt 0 oder 1.

Befindet sich eine oder zwei, bevorzugt eine Silangruppe in höchstens einem der Reste $R^3$, $R^4$, $R^5$ oder $R^6$, so sind solche Verbindungen der Formel I bevorzugt, in welchem die Silangruppe(n) im Substitu-

enten $R^3$ bzw. $R^4$ enthalten ist. Beispiele solcher Ver bindungen enthalten Substituenten der Formeln (III), (IV), (V) oder (VI), die oben definiert wurden. In diesen ist m 1 bis 8, bevorzugt 2 bis 4 und besonders bevorzugt 3. Die bevorzugte Bedeutung von r ist 1; wobei mit r=2 gerade ein Beispiel einer Verbindung gegeben ist, in welchem zwei Silangruppe in höchstens einem der Substituenten $R^3$, $R^4$, $R^5$ oder $R^6$ enthalten ist. t bedeutet bevorzugt 0 oder 1.

In solchen Verbindungen kann Z beispielsweise eine Gruppe der Formel XVII

$-[(R^{10})C(R^{11})]_n- OR^7$

bedeuten, worin die Symbole, n, $R^7$, $R^{10}$, $R^{11}$ die oben angegebene Bedeutung haben.

Beispiele von Verbindungen der Formel I sind:

| n | $R^1$ | $R^2$ | $R^3$ | $R^6$ | Z |
|---|---|---|---|---|---|
| 1 | H | $CH_2$<br>$-CH-CH_3$ | $(CH_3O)_3Si(CH_2)_3OCH_2-$ | H | $-(CH_2)_3Si(OC_2H_5)_3$ |
| 1 | H | $CH_3$<br>$-CH-CH_3$ | 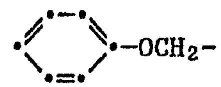 | H | $-(CH_2)_3Si(OC_2H_5)_3$ |
| 1 | $-CH_3$ | $-C_2H_5$ | 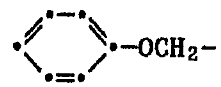 | H | $-(CH_2)_3Si(OC_2H_5)_3$ |
| 1 | H | $CH_3$<br>$-CH-CH_3$ | H | H | O<br>$-CH_2CH_2OCNH(CH_2)_3Si(OC_2H_5)_3$ |
| 1 | H | $CH_3$<br>$-CH-CH_3$ | H | H | 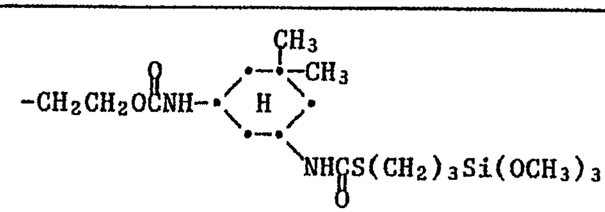 |
| 1 | $-CH_3$ | $-C_2H_5$ | $-CH_3$ | H | $CH_3$ O<br>$-CH_2-CHOCNH(CH_2)_3Si(OC_2H_5)_3$ |
| 1 | $-CH_3$ | $-C_2H_5$ | $(CH_3O)_3Si(CH_2)_3OCH_2-$ | H | $-(CH_2)_3CH_3$ |
| 1 | H | $CH_3$<br>$-CH-CH_3$ | $(CH_3O)_3Si(CH_2)_3OCH_2-$ | H | 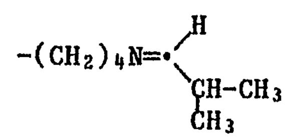 |

<u>Fortsetzung</u>

| n | $R^1$ | $R^2$ | $R^3$ | $R^6$ | Z |
|---|---|---|---|---|---|
| 1 | H | $-\overset{CH_3}{CH}-CH_3$ | H | H | $-CH_2\underset{CH_3}{CH}-\overset{O}{\overset{\|}{C}}-O-(CH_2)_3Si(OCH_3)_3$ |
| 2 | $-CH_3$ | $-C_2H_5$ | $-CH_2O(CH_2)_3Si(OC_2H_5)_3$ | H | $-(CH_2)_6-$ |
| 2 | H | $-\overset{CH_3}{CH}-CH_3$ | $-CH_2O(CH_2)_3Si(OC_2H_5)_3$ | H | $-(CH_2)_4O(CH_2)_4-$ |
| 2 | H | $-\overset{CH_3}{CH}-CH_3$ | $-CH_2O(CH_2)_3Si(OC_2H_5)_3$ | H | 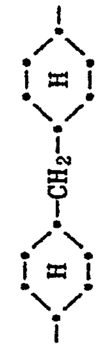 |
| 2 | H | $-\overset{CH_3}{CH}-CH_3$ | $-CH_2O(CH_2)_3Si(OC_2H_5)_3$ | H | 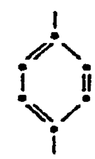 |

Dabei sind Verbindungen gemeint, worin $R^4$ bzw. $R^5$ Wasserstoff bedeuten.

Die Herstellung der Verbindungen der Formel I erfolgt auf an sich bekannte Weise und kann am einfachsten anhand der folgenden Reaktionsschematas wiedergegeben werden:

I. <u>Silan in Z, falls n 1 ist:</u>

I.1. 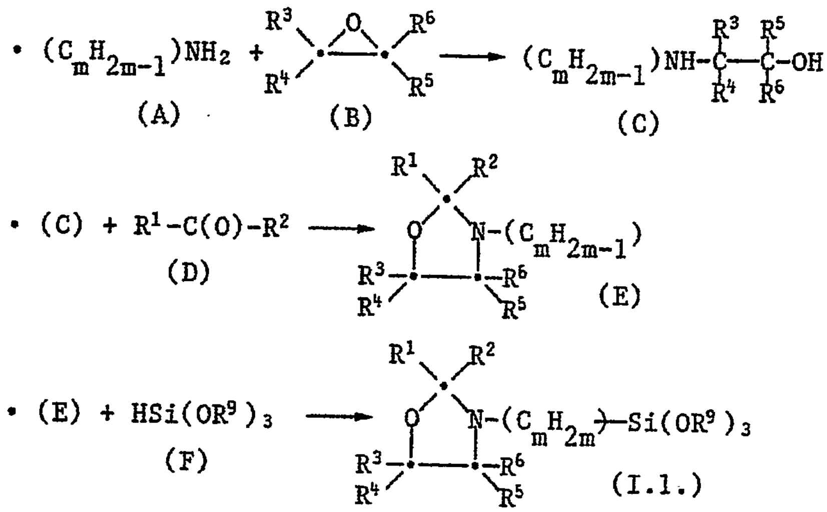

(A) (B) (C) (D) (E) (F) (I.1.)

Die ersten beiden Stufen können beispielsweise analog den in der EP-A 96,768 beschriebenen Methoden durchgeführt werden, d.h. es wird ein primäres Alkenylamin (A), vorzugsweise mit Vinylgruppen mit ungefähr der äquimolaren Menge einer Monoepoxidverbindung (B) bei ungefähr 60-130°C umgesetzt. Bevorzugt wird die Umsetzung von Epoxid und Amin in Ethanol in Gegenwart katalytischer Mengen Säure, wie z.B. p-Toluolsulfonsäure, durchgeführt.

Die in der dritten Stufe durchgeführte Einführung der Silangruppe ist eine bekannte Additionsreaktion, welche in Gegenwart von Platinkatalysatoren, z.B. $H_2PtCl_6$ oder in Gegenwart eines Peroxids durchgeführt werden kann.

Die bei dieser Methode eingesetzten Ausgangsstoffe (A), (B), (D) und (F) sind bekannte Verbindungen, sie sind zum Teil handelsüblich oder können auf bekannte Weise hergestellt werden. Als Epoxidkomponente werden vorzugsweise die in der Epoxidharzchemie gebräuchlichen reaktiven Verdünner eingesetzt.

I.2. 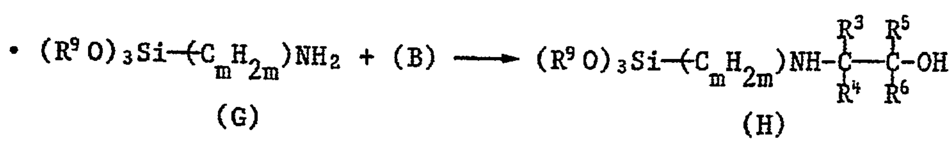

(G) (H)

• $(H) + (D) \longrightarrow (I.1.)$

Diese Methode erfolgt analog den in der EP-A 96,768 beschriebenen Methoden. Die Edukte (B), (D) und (G) sind bekannte Verbindungen, zum Teil im Handel erhältlich oder können auf einfache bekannte Weise hergestellt werden.

I.3.

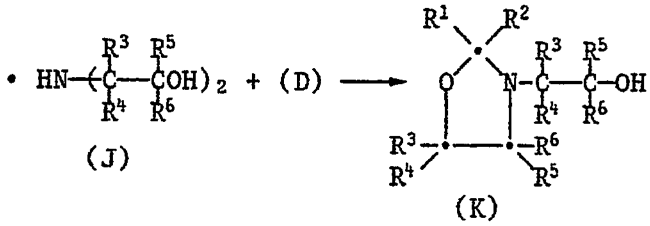

(J) (K)

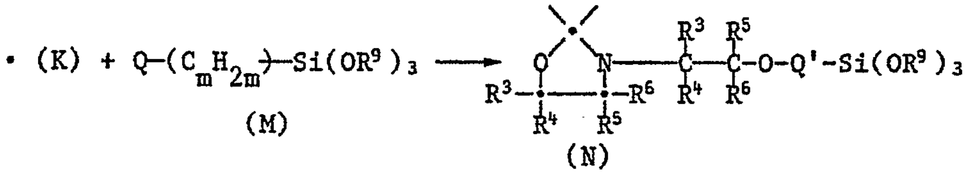

(M) (N)

Die erste Stufe dieser Methode erfolt nach der DE-OS 24 46 438, währenddem in der zweiten Stufe eine übliche Reaktion mit der freien OH-Gruppe in (K) dargestellt ist. Dabei kommen vor allem Reaktionen in Frage, welche zu Ester- oder Etherbildung führen. Mit Q wird symbolisiert, dass dieser Rest mindestens einen zu solchen Reaktionen fähigen Substituenten besitzt. Dabei kommen insbesondere der Carbonsäurerest, Anhydrid-, Ester- oder (Thio)-Urethan-Gruppen in Frage. Mit Q' wird gekennzeichnet, dass die Silangruppe über eine Ester-, Ether-, Carbamat- oder Thiocarbamat-Funktion verknüpft ist. Beispiele für solche Typen sind mit den Formeln XI, XII, XIII, XIV, XV und XVI als Bestandteile der Formel X wiedergegeben. Selbstverständlich sind eine Vielzahl zusätzlicher Strukturen denkbar, welche auf die gleiche Weise zugänglich sind. Da es für die Erfindung jedoch nur wesentlich ist, dass für diesen Typ Verbindungen der Rest Z eine Silangruppe $-Si(OR^9)_3$ enthält, und nicht, wie diese mit Oxazolidinring verbunden ist, würde eine lange Liste von Brückengliedern nicht zum Verständnis der vorliegenden Erfindung beitragen.

I.4.

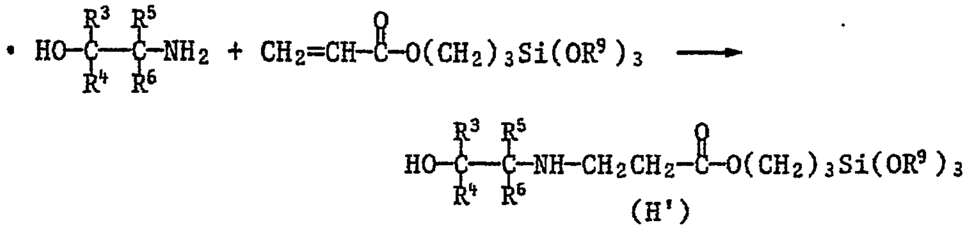

(H')

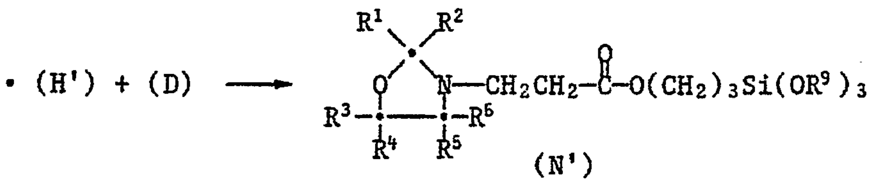

(N')

Auch diese Variante erfolgt nach den bekannten Methoden, auf welche oben hingewiesen wurde.

II. Silan in einem der Reste $R^3$, $R^4$, $R^5$ und $R^6$

II.1.

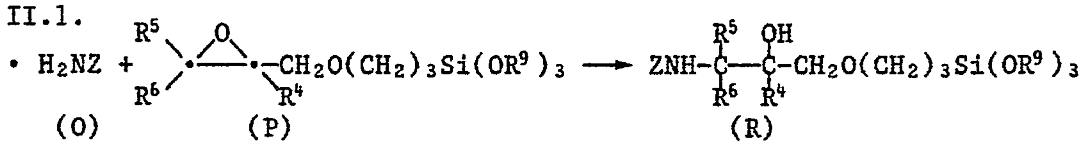

(O) (P) (R)

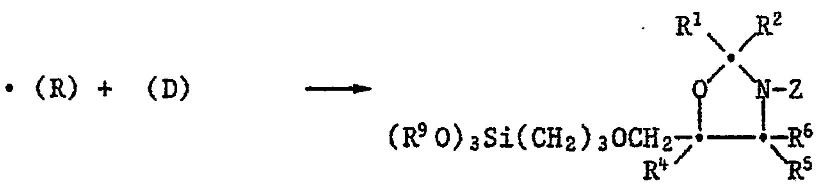

(S)

Diese Methode erfolgt analog den Vorschriften, welche in der EP 96,768 beschrieben sind. Die Ausgangsstoffe (O), (P) und (D) sind im Handel erhältlich oder lassen sich nach üblichen Methoden herstellen.

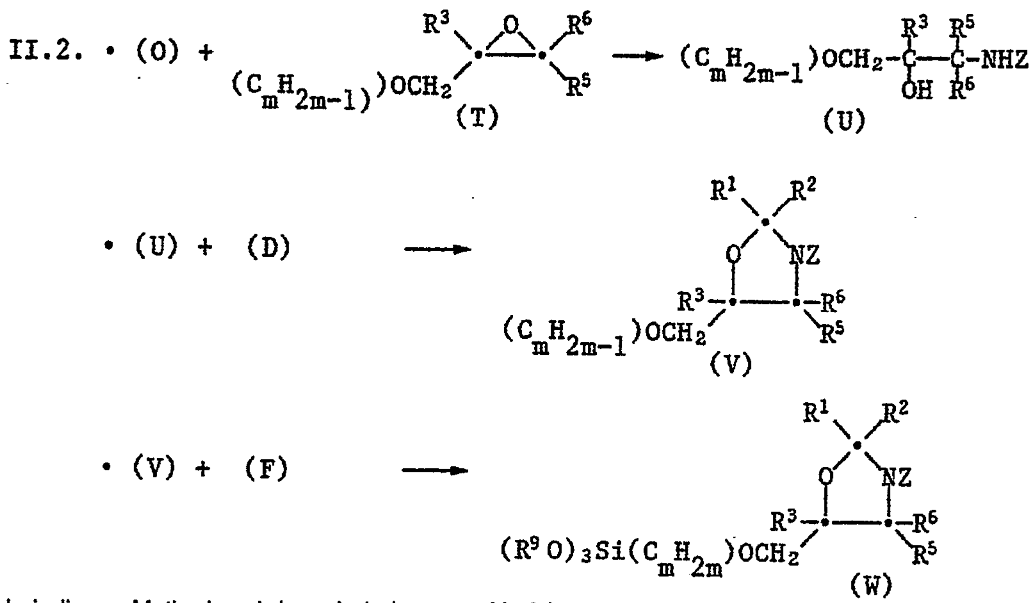


Auch bei dieser Methode wird nach bekannten Verfahren vorgegangen, wie sie etwa in der EP-A 96,768 beschrieben sind.

II.3. Ausserdem kann man zu Verbindungen der Formel I gelangen, wenn man gemäss den Verfahren vorgeht, welche in Chem. Pharm. Bulletin, 19, 2404 (1971) beschrieben sind.

II.4. Verbindungen der Formel I, worin n 2 ist, werden analog den Verfahren II.1. und II.2. hergestellt, wobei anstelle eines Monoamins ein Diamin der Formel $H_2NZNH_2$ zum Einsatz kommt.

III. Silan in Z und in einem der Reste $R^3$, $R^4$, $R^5$ oder $R^6$

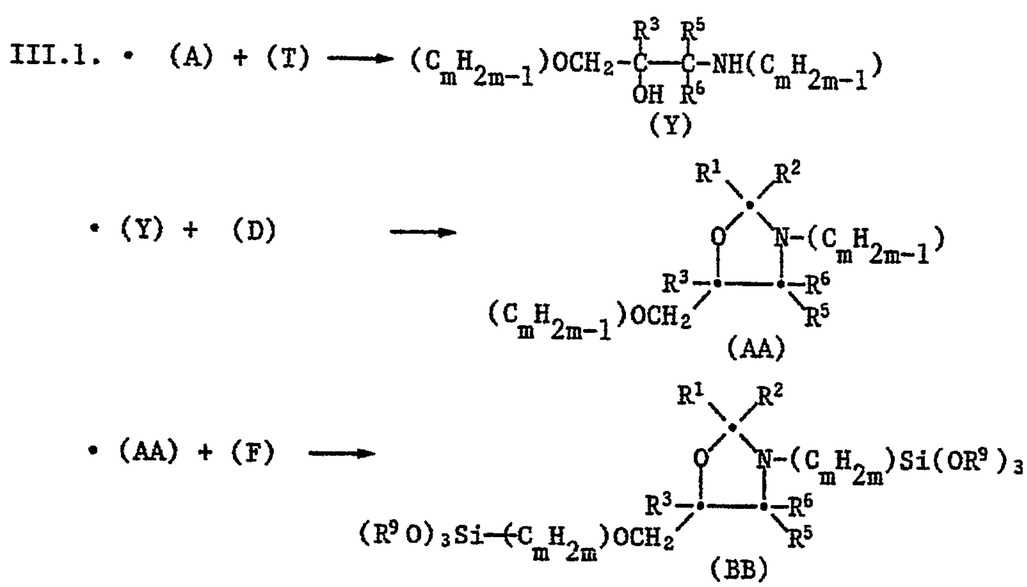


Diese Methode entspricht derjenigen, welche unter I.1. und II.2. diskutiert wurde.

III.2.

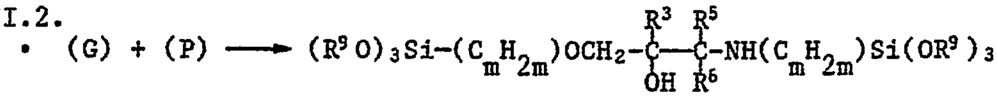

(CC)

• (CC) + (D) ⟶ (BB)

Ebenfalls diese Methode entspricht den unter I.1. und II.2. beschriebenen Verfahren. Verbindungen, die von diesen Schematas nicht erfasst sind, werden in Analogie dazu hergestellt, so z.B. die Verbindungen der Formel XVII in Analogie zu Methode I.3.

Die erfindungsgemässen Verbindungen können grundsätzlich in verschiedenen Substraten als Haftvermittler eingesetzt werden. Besonders wirkungsvoll ist ihr Einsatz in feuchtigkeitshärtenden Epoxidharzen und Polyurethanharzen, welche als Klebstofe, Dichtungsmassen, Lacke oder Isolierstoffe zur Anwendung kommen. Handelt es sich um Klebstoffe, so besitzen die erfindungsgemässen Verbindungen Eigenschaften, welche ihren Einsatz in Zweikomponenten- und ganz besonders in Einkomponentensystemen ermöglichen. Der Einsatz der erfindungsgemässen Verbindungen, insbesondere als eingebaute Haftvermittler in den genannten Substraten, macht eine Vorbehandlung der zu verklebenden Oberflächen mit einem Primer überflüssig. Als Anwendungsbeispiele sei das Verkleben von Windschutzscheiben und Scheinwerfern im Automobilbau erwähnt. Verbindungen der Formel I mit n=2 oder polyfunktionelle Verbindungen der Formel I mit n=1 können ausserdem als feuchtigkeitsaktivierte Härter für die genannten Substrate eingesetzt werden.

Sind die feuchtigkeitshärtenden Harze Epoxidharze, so sind es vorzugsweise solche, die direkt an Sauerstoff-, Stickstoff- oder Schwefelatome gebundene Gruppen der Formel

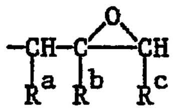

(XVIII)

enthalten, worin entweder $R^a$ und $R^c$ je eine Wasserstoffatom darstellen, in welchem Fall $R^b$ dann ein Wasserstoffatom oder eine Methylgruppe bedeutet, oder $R^a$ und $R^c$ zusammen $-CH_2CH_2$-darstellen, in welchem Fall $R^b$ dann ein Wasserstoffatom bedeutet.

Als Beispiele solcher Harze seien Polyglycidyl- und Poly(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly(β-methylglycidyl)-ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Ether lassen sich mit Poly-(epichlorhydrin) aus acyclischen Alkoholen wie Ethylenglykol, Diethylglykol und höheren Poly-(oxyethylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3 und aus Alkoholen mit aromtischen Kernen wie N,N-Bis-(2-hydroxyethyl)-anilin und p,p'-Bis-(2-hydroxyethylamino)-diphenyl-methan herstellen. Man kann sie ferner aus einkernigen Phenolen wie Resorcin und Hydrochinon sowie mehrkernigen Phenolen wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol, mit Phenolen wie Phenol selbst und durch Chloratome oder Alkygruppen mit jeweils bis zu neun Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4-methylaminophenyl)-methan erhalten werden. Triglycidylisocyanurat sowie N,N'-Diglycidylderivate von cyclischen Alkylenharnstoffen wie Ethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen wie Ethan-1,2-dithiol und Bis-(4-mercaptomethylphenyl)-ether.

Beispiele für Epoxidharze mit Gruppen der Formel XVIII, worin $R^a$ und $R^b$ zusammen eine $-CH_2CH_2-$Gruppe bedeuten, sind Bis-(2,3-epoxycyclopentyl)-ether, 2,3-Epoxiycyclopentyl-glycidylether und 1,2-Bis-(2,3-epoxycyclopentyloxy)-ethan.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidylether/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3)-propan.

Gewünschtenfalls kann man Epoxidharzgemische verwenden.

Bevorzugte Epoxidharze sind die Polyglycidylether, Polyglycidylester, und N,N'-Diglycidylhydantoine. Speziell bevorzugte Harze sind die Polyglycidylether des 2,2-Bis-(4-hydroxyphenyl)-propans, des Bis-(4-hydroxyphenol)-methans oder eines aus Formaldehyd und Phenol oder durch ein Chloratom oder eine Alkylkohlenwasserstoffgruppe mit einem bis neun Kohlenstoffatomen substituiertem Phenol gebildeten Novolak mit einem 0,5 val/kg übersteigenden 1,2-Epoxidgehalt.

Geeignete Härter für die Härtung der erwähnten Harze bei Raumtemperatur sind beispielsweise aliphatische, cycloaliphatische Ketimine oder Aldimine von primären Aminen oder Enamine von sekundären Aminen. Als primäre Amine eignen sich beispielsweise aliphatische Polyamine einschliesslich der Alkylendiamine, wie Ethylendiamin, Propan-1,2-diamin, Propan-1,3-diamin, Hexamethylendiamin oder N,N-Dimethylpropylen-1,3-diamin; sowie Diethyltriamin, Triethylentetramin oder Tetraethylenpentamin oder Ethanolamin. Ferner können cycloaliphatische Polyamine eingesetzt werden, wie beispielsweise Bis-(aminocyclohexyl)-methan, Bis-(4-amino-3-methylcyclohexyl)-methan oder Isophorondiamin. Man kann aber auch Polyaminoamide, wie beispielsweise die Raktionsprodukte von aliphatische Polyaminen mit dimerisierten oder trimerisierten ungesättigten Fettsäuren verwenden. Obgleich die obenerwähnten Härter bereits bei Raumtemperatur wirken, kann die Härtung beschleunigt auch bei erhöhter Temperatur durchgeführt werden.

Die Mischungen können ferner geeignete Plastifizierungsmittel, wie Dibutylphthalat oder Dioctylphthalat, inerte Verdünner, wie Teer oder Bitumen, oder sogenannte reaktive Verdünner, insbesondere Monoepoxide, wie n-Butylglycidylether, iso-Octylglycidylether, Phenylglycidylether, Cresyglycidylether, Glycidylester von gemischten, tertiären, aliphatischen Monocarbonsäuren, Glycidylacrylate und Glycidylmethacrylate enthalten. Sie können ferner Zusatzstoffe enthalten, wie Füllstoffe, Verstärkungsstoffe, Farbmittel, Verlaufsmittel, Flammhemmstoffe und Formtrennmittel.

Als Streckmittel, Füllstoffe und Verstärkungsstoffe eignen sich beispielsweise Glasfasern, Kohlenstofffasern, Glaskügelchen, Glimmer, Quarzpulver, Calciumcarbonat, Cellulose, Kaolin, Wollastonit, kolloidale Kieselsäure mit grosser spezifischer Oberfläche, gepulvertes Polyvinylchlorid und gepulverte Polyolefinkohlenwasserstoffe, wie Polyäthylen und Polypropylen.

In der erfindungsgemässen Zusammensetzung werden die oben genannten Harz/Härterkomponente in Kombinationen mit silanhaltigen Oxazolidinen der Formel I eingesetzt, wobei etwa 0,1-20 Gew.%, bevorzugt 0,5-5 Gew.% der Verbindung der Formel I, bezogen auf das Epoxyharz zugegeben wird. Bei polyfunktionellen Oxazolidinen der Formel I, wobei Z Aldimin- oder Ketimingruppen enthält, oder bei Polyoxyzolidinen wobei n 2 ist, können diese Oxazolidine als Härter eingesetzt werden, ohne dass zusätzliche Härter gefordert sind. Dabei ist allerdings zu beachten, dass das Molverhältnis von freigesetzten NH-Gruppen des hydrolysierten Oxazolidins im Vergleich zum Epoxidgehalt nicht grösser als 1,5 und nicht kleiner als 0,7 wird, um eine vollständige Härtung zu gewährleisten. Die Härtung kann durch Erhitzen oder Zusatz von Beschleunigern verbessert werden.

Handelt es sich beim Substrat um feuchtigkeitshärtende Polyurethane, so enthalten diese als Hauptbestandteil mehrfunktionelle Isocyanate und/oder Polyurethan-Präpolymere. Geeignet sind hier sowohl aromatische als auch aliphatische, monocyclische wie polycyclische, mehrfunktionelle Isocyanatverbindungen. So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen grösser als 2. Ein weiteres geeignetes aliphatisches Diiscyanat ist Xylylendiisocyanat. Darüber hinaus kann eine Vielzahl aliphatischer Isocyanate der Funktionalität 2 und höher eingesetzt werden. Beispiele sind hier Isophorondiisocyanat und Dicyclohexylmethandiisocyanat als cyclische ali phatische Diisocyanate. Weitere Beispiele sind aliphatische, geradkettige Diisocyanate, wie sie durch Phosgenisierung von Diaminen gewonnen werden, z.B. Tetramethylendiisocyanat oder Hexamethylendiisocyanat.

Nach einer bevorzugten Ausführungsform der Erfindung werden anstatt der mehrfunktionellen Isocyanatverbindungen Polyurethan-Präpolymere eingesetzt. Unter Präpolymeren werden hier die Addukte eines Ueberschusses mehrfunktioneller Isocyanate an mehrfunktionelle Alkohle, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umsetzungsprodukte von Diisocyanaten mit Polyetherpolyolen, z.B. Polyetherpolyolen auf Basis Polyethylenoxid oder

auf Basis Polypropylenoxid können als Präpolymere verwendet werden. Bevorzugt sind Polyurethan-Präpolymere auf Basis von Polyetherpolyolen mit Molgewichten zwischen 200 und 10000, insbesondere 500 und 3000. Dem Polyurethan-Fachmann sind eine grosse Anzahl derartiger Polyetherpolyole bekannt; sie werden von zahlreichen Herstellern angeboten und über ihr Molekulargewicht (Zahlenmittel), das aus Endgruppenbestimmungen errechenbar ist, charakterisiert. Weitere geeignete Polyetherpolyole sind Polyetherpolyole auf Basis Polytetrahydrofuran.

Anstelle von Polyetherpolyole können auch Polyesterpolyole eingesetzt werden. Geeignete Polyesterpolyole sind Umsetzungsprodukte mehrfunktioneller Säuren mit mehrfunktionellen Alkohlen, beispielsweise Polyester auf Basis aliphatischer und/oder aromatischer Dicarbonsäure und mehrfunktioneller Alkohole der Funktionalität 2-4. So können Polyester aus Adipinsäure, Sebacinsäure, Phthalsäure Hydrophthalsäure und/oder Trimellitsäure einerseits und Ethylenglykol, Propylenglykol, Neopentylglykol, Hexanglykol, Glycerin und/oder Trimethylolpropan andererseits eingesetzt werden. Geeignet sind insbesondere Polyesterpolyole mit Molekulargewicht (Zahlenmitte) zwischen 500 und 5000, insbesondere zwischen 600 und 2000. Weitere geeignete Polyesterpolyole sind die Umsetzungsprodukte von Caprolacton mit Alkoholen der Funktionalität von 2-4, so beispielsweise das Additionsprodukt von 1-5 Mol Caprolacton an 1 Mol Ethylenglykol, Propylenglykol, Glycerin und/oder Trimethylpropan.

Eine weitere geeignete Klasse mehrfunktioneller Alkohole sind Polybutadienole. Hierbei handelt es sich um Oligomere auf Basis Butadien, die als Endgruppen OH-Gruppen aufweisen. Geeignet sind hier Produkte im Molekulargewichtsbereich 200-4000, insbesondere 500-3000.

Bei der Herstellung der Polyurethan-Präpolymeren ist das Verhältnis von OH-Gruppen der Alkoholkomponente zu Isocyanatgruppen von Bedeutung. Dieses liegt im allgemeinen zwischen 1:2 und 1:10. Dabei werden mit höheren Isocyanatüberschüssen eher niedrigviskose Polyurethan-Präpolymere erhalten, während niedere Isocyanatüberschüsse hochviskose, meist nur noch spachtelbare Zubereitungen liefern.

Es ist dem Polyurethan-Fachmann bekannt, dass die Vernetzungsdichte und damit Härte und Sprödigkeit der Polyurethane mit der Funktionalität der Isocanatkomponente oder auch des Polyols zunimmt. Es sei hier auf die allgemeine Fachliteratur verwiesen, z.B. auf die Monographie von Saunders und Frisch "Polyurethanes, Chemistry and Technology", Band XVI der Serie High Polymers "Interscience Publishers" New York-London, Teil I (1962) und Teil II (1964).

Die erfindungsgemässen Polyurethanzubereitungen können weiterhin verschiedene Hilfsstoffe enthalten. Verwendet werden können hier z.B. Füllstoffe. Als Füllstoffe geeignet sind gegenüber Isocyanaten nicht-reaktive, anorganische Verbindungen wie z.B. Kreide oder Kalkmehl, gefällte und/oder pyrogene Kieselsäuren, Zeolithe, Bentonite, gemahlene Mineralien sowie andere dem auf dem Arbeitsgebiet tätigen Fachmann bekannte anorganische Füllstoffe, insbesondere Faserkurzschnitte und anderes. Für manche Anwendungen sind Füllstoffe bevorzugt, die den Zubereitungen Thixotropie verleihen, so beispielsweise quellbare Kunststoffe insbesondere PVC.

Ausser den genannten Verbindungen können die erfindungsgemässen Polyurethanzubereitungen noch weitere Hilfsstoffe, beispielsweise Lösungsmittel enthalten. Geeignet sind Lösungsmittel, die ihrerseits nicht mit Isocyanatgruppen reagieren, so z.B. halogenierte Kohlenwasserstoffe, Ester, Ketone, aromatische Kohlenwasserstoffe u.a.. Auch Weichmacher, Flammschutzmittel, Verzögerer, Farbstoffe und Alterungsschutzmittel, wie sie in Polyurethan-Klebstoffen und Dichtungsmassen bekannt sind, können mit eingearbeitet werden.

Für manche Anwendung ist es wünschenswert, den erfindungsgemässen Polyurethanzubereitungen Schaumstabilisatoren zuzusetzen. Als Schaumstabilisatoren können sogenannte Silikotenside verwendet werden. Es sind dies Blockcopolymere, die aus einem Polysiloxanblock und einem oder mehreren Polyoxyethylen- und/oder Polyoxypropylenblöcken aufgebaut sind. Die erfindungsgemässen Polurethanzubereitungen können weiterhin flammhemmende und weichmachende Zusätze enthalten. Gängig sind Phosphor- und/oder Halogenatome enthaltende Verbindungen, wie Tricresylphosphat, Diphenylcresylphosphat, Tris-2-chlor-ethylphosphat, Tris-2-chlorpropylphosphat und Tris-2,3-dibrompropylphosphat. Zusätzlich können Flammschutzmittel verwendet werden, z.B. Chlorparaffine, Halogenphosphide, Ammoniumphosphat und halogen- und phosphorhaltige Harze. Als weitere Zusätze sind für manche Anwendungen Weichmacher von Bedeutung. Geeignet sind hier beispielsweise Ester der Phthalsäure oder Ester langkettigter Dicarbonsäuren, beispielsweise Sebacinsäure- oder Azelainsäureester. Auch sogenannte Epoxidweichmacher, z.B. epoxydierte Fettsäurederivate können hier eingesetzt werden.

Weitere mögliche Zusätze sind basische Beschleuniger. Diese sollten nicht verwendet werden, wenn Carbonsäureanhydride als Beschleuniger eingesetzt werden. Basische Beschleuniger sind beispielsweise tertiäre Basen wie Bis-(N,N'-dimethylamino)-diethylether, Dimethylamino-cyclohexan, N,N-Dimethylbenzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxy ethyl)-amin und Dicarbonsäuren. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt, beispielsweise Eisenpentacarbonyl, Nickeltetracarbonyl, Eisenacetylacetonat sowie Zinn-(II)-2-ethylhexoat), Dibutylzinndilaurat oder Molybdänglykolat.

Polyurethan-Präpolymeren werden die Verbindungen der Formel I im allgemeinen in Mengen von 0,1-20 Gew.%, bevorzugt 0,5-5 Gew.%, bezogen auf das Präpolymer, zugegeben.

Werden die Verbindungen der Formel I als Härter eingesetzt, so soll das Mol-Verhältnis von freigesetzten

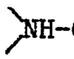-Gruppen

zu freien Isocyanatgruppen im Präpolymer zweckmässig 0,5 bis 1,5:1; vorzugsweise 0,9 bis 1,1:1 betragen.

Beispiel 1

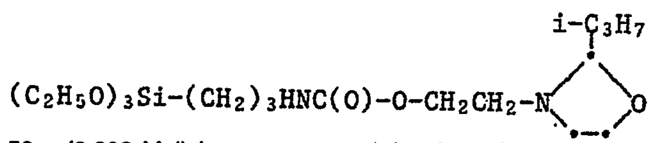

Zu einer Mischung von 50 g (2,202 Mol) Isocyanatopropyltrimethoxysilan und 0,1 ml Dibutylzinndilaureat werden 32,1 g (0,202 Mol) N-Hydroxyethyl-2-isopropyl-(1,3)-oxazolidin ($Kp_{0,1}$ 70°C, hergestellt aus Isobutyraldehyd und Diethanolamin) bei 60°C zugetropft. Nach Abklingen der leicht exothermen Reaktion wird während 12 Stunden bei 60°C gerührt. Man isoliert 79 g (95 % der Theorie) einer Flüssigkeit mit den folgenden Analysendaten:

Viskosität $\eta_{25°C}$: 50 mPas

Brechungsindex $n_D^{25}$ : 1,452

Titration: 2,36 Mol NH/Kg

(ber. 2,46)

| Elementaranalyse: $C_{18}H_{38}N_2O_6Si$ | gef. | ber. |
|---|---|---|
| % C | 53,00 | 53,17 |
| % H | 9,19 | 9,42 |
| % N | 7,01 | 6,89 |

Beispiel 2

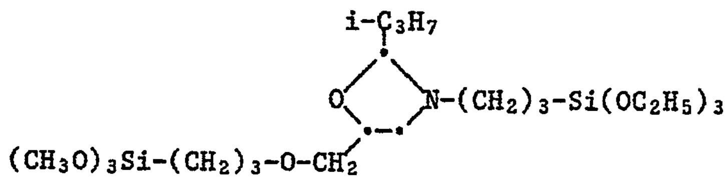

Zu einer Mischung aus 222 g (1 Mol) Aminopropyltriethoxysilan in 1 L. trockenem Ethanol in Gegenwart von 10 mg p-Toluolsulfonsäuremonohydrat werden bei 40°C 236 g (1 Mol) Glycidyloxypropyltrimethoxysilan zugetropft. Nach Abklingen der leicht exothermen Reaktion wird die Mischung während 12 Stunden bei Rückflusstemperatur gehalten. Nach Abdestillieren des Ethanols im Wasserstrahlvakuum werden 1 L Toluol, 150 g Isobutyraldehyd und 200 mg p-Toluolsulfonsäure zugegeben, 1 Stunde bei 60°C gerührt und über Nacht am Wasserabscheider gekocht, um das entstandene Wasser azeotrop zu entfernen. Danach werden die flüchtigen Anteile im Wasserstrahlvakuum am Rotationsverdampfer abgezogen und eine Stunde bei 60°C/0,133 mbar getrocknet. Man isoliert 457 g (89 % der Theorie) einer Flüssigkeit mit den folgenden Analysendaten:

Viskosität $\eta_{25°C}$ = 150 mPas

brechungsindex $n_D^{25}$ = 1,452

Titration: 2,0 Mol NH/Kg

(ber. 1,96)

| Elementaranalyse: $C_{22}H_{49}NO_8Si_2$ | | gef. | ber. |
|---|---|---|---|
| | % C | 51,50 | 51,65 |
| | % H | 9,40 | 9,65 |
| | % N | 2,70 | 2,74 |

Beispiel 3

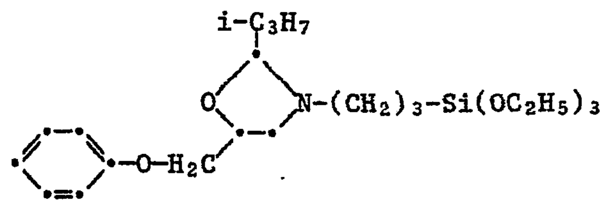

Zu einer Mischung aus 222 g (1 Mol) Aminopropyltriethoxysilan und 1 L trockenem Ethanol in Gegenwart von 10 mg p-Toluolsulfonsäuremonohydrat werden bei 30°C 150 g (1 Mol) Phenylglycidether zugetropft und während 12 Stunden bei Rückflusstemperatur gehalten. Nach Abziehen des Ethanols im Wasserstrahlvakuum werden bei Raumtemperatur 500 ml Toluol, 100 g Isobutyraldehyd und 100 mg p-Toluolsulfonsäuremonohydrat zugegeben, 1 Stunde bei 60°C gerührt und über Nacht am Wasserabscheider gekocht, um das entstandene Wasser durch azeotrope Destillation zu entfernen. Danach werden alle flüchtigen Anteile am Rotationsverdampfer zuerst bei 60°C/Wasserstrahlvakuum und dann 1 Stunde bei 60°C und 0,133 mbar entfernt. Man isoliert eine Flüssigkeit mit den folgenden Analysendaten:
Viskosität $\eta_{25°C}$: 200 mPas
Brechungsindex $n_D^{25}$ : 1,492
Titration: 2,27 Mol NH/Kg
(ber. 2,35)

| Elementaranalyse: $C_{22}H_{39}NO_5Si$ | | gef. | ber. |
|---|---|---|---|
| | % C | 61,62 | 62,08 |
| | % H | 8,73 | 9,24 |
| | % N | 3,67 | 3,29 |

Beispiel 4

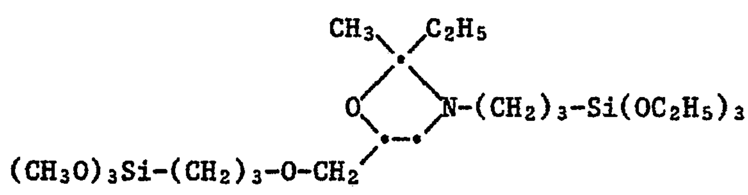

Unter Stickstoff wird eine Mischung von 155 g (0,66 Mol) Glycidyloxypropyltrimethoxysilan in 500 ml trockenem Toluol bei 60°C über 40 Minuten mit 146 g (0,66 Mol) Aminopropyltriethoxysilan versetzt, 3 Stunden bei 80°C gerührt und auf Raumtemperatur abkühlen gelassen. Dann werden 300 g Ethylmethylketon und weitere 500 g Toluol zugegeben, eine Stunde bei Raumtemperatur gerührt und nach Zugabe von 100 mg p-Toluolsulfonsäuremonohydrat während 12 Stunden bei Rückflusstemperatur am Wasserabscheider gekocht. Danach wird das Toluol bei 60°C im Vakuum abgezogen, filtriert und eine Stunde bei 60°C/0,532 mbar getrocknet. Ausbeute: 281 g (86 % der Theorie) einer Flüssigkeit mit den folgenden Eigenschaften
Viskosität $\eta_{25°C}$: <50 mPas
Brechungsindex $n_D^{25}$ : 1,442

Titration: 1,98 Mol NH/kg
(ber. 1,96)

| Elementaranalyse: $C_{22}H_{49}NO_8Si_2$ | gef. | ber. |
|---|---|---|
| % C | 51,98 | 51,65 |
| % H | 9,37 | 9,65 |
| % N | 2,81 | 2,74 |

Beispiel 5

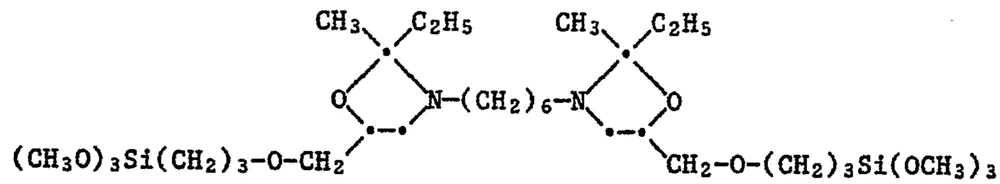

Unter Stickstoff wird eine Mischung von 58 g (0,5 Mol) 1,6-Diaminohexan in 500 ml Toluol vorgelegt und bei 60°C innerhalb von 30 Minuten mit 236 g (1,0 Mol) 3-Glycidyloxypropyltrimethoxysilan versetzt und bei 80°C 2 Stunden gerührt. Danach werden weitere 500 ml Toluol zugegeben, auf 30°C abkühlen gelassen, mit 300 g Ethylmethylketon versetzt und eine Stunde lang bei Raumtemperatur gerührt. Nach Zugabe von 100 mg p-Toluolsulfonsäuremonohydrat wird während 12 Stunden bei Rückflusstemperatur am Wasserabscheider gekocht. Das Lösungsmittel wird bei 60°C abgezogen im Vakuum, die Flüssigkeit filtriert und bei 60°C/0,532 mbar vom restlichen Lösungsmittel befreit. Man isoliert 281 g (84 % der Theorie) einer Flüssigkeit mit den folgenden Eigenschaften
Viskosität $\eta_{25°C}$: 80 mPas
Brechungsindex $n_D^{25}$ : 1,457
Titration: 3,05 Mol NH/Kg
(ber. 2,87)

| Elementaranalyse: $C_{32}H_{68}N_2O_{10}Si_2$ | gef. | ber. |
|---|---|---|
| % C | 54,78 | 55,15 |
| % H | 9,51 | 9,84 |
| % N | 4,39 | 4,02 |

Beispiel 6

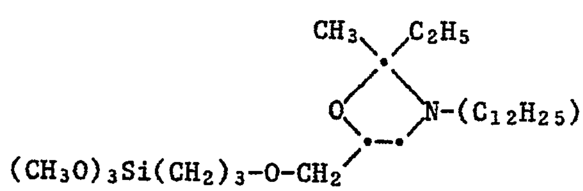

Unter Stickstoff werden 185 g (1 Mol) Dodecylamin in 500 ml Toluol vorgelegt und bei 80°C mit 236 g (1 Mol) Glycidyloxypropyltrimethoxysilan innerhalb von 2 Stunden versetzt und dann 2 Stunden bei 80°C gerührt. Danach wird mit 1 L. Toluol versetzt, abkühlen gelassen und 300 g Ethylmethylketon zugegeben. Nach einer Stunde werden 100 mg p-Toluolsulfonsäuremonohydrat zugegeben und während 12 Stunden bei Rückflusstemperatur am Wasserabscheider gekocht. Dann wird das Lösungsmittel bei 60°C im Vakuum abgezogen, die leicht gelbliche Flüssigkeit filtriert und 1 Stunde bei 60°C/0,532 mbar vom restlichen Lösungsmittel befreit. Ausbeute 450 g (95 % der Theorie) einer Flüssigkeit mit den folgenden Analysendaten:

Viskosität $\eta_{25°C}$: <50 mPas
Brechungsindex $n_D^{25}$ : 1,458
Titration: 1,88 Mol NH/Kg
(ber. 2,10)

| Elementaranalyse: $C_{25}H_{53}NO_5Si$ | | gef. | ber. |
|---|---|---|---|
| | % C | 67,20 | 63,12 |
| | % H | 10,20 | 11,23 |
| | % N | 2,82 | 2,94 |

Beispiel 7

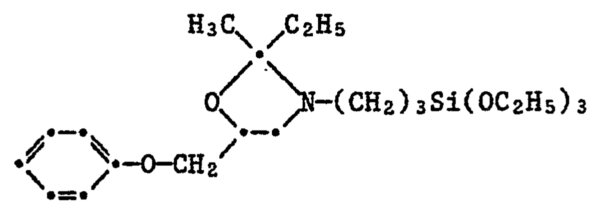

Unter Stickstoff wird zu 150 g (1 Mol) Phenylglycidylether in 1 L Toluol bei Raumtemperatur 221 g Aminopropyltriethoxysilan (1 Mol) innerhalb von 30 Minuten zugetropft. Nadem 2 Stunden bei Raumtemperatur gerührt, wird während 4 Stunden auf 80°C erhitzt. Dann werden 200 mg p-Toluolsulfonsäuremonohydrat zugegeben, auf unter 50°C abgekühlt, mit Ethylmethylketon versetzt und während 12 Stunden bei Rückflusstemperatur am Wasserabscheider gekocht. Dann wird bei 60°C im Vakuum das Lösungsmittel abgezogen, das Produkt filtriert und eine Stunde bei 60°C/0,532 mbar getrocknet. Ausbeute: 370,4 g (87 % der Theorie) einer Flüssigkeit mit den folgenden Analysendaten:
Viskosität $\eta_{25°C}$: 220 mPas
Brechungsindex $n_D^{25}$ : 1,490
Titration: 2,38 Mol NH/Kg
(ber. 2,35)

| Elementaranalyse: $C_{22}H_{39}O_5NSi$ | | gef. | ber. |
|---|---|---|---|
| | % C | 60,84 | 62,09 |
| | % H | 8,96 | 9,23 |
| | % N | 3,67 | 3,29 |

Beispiel 8

(A) Präpolymer Synthese:

Zu Methylendiphenyldiisocyanat (Isonate® 125M) wird unter Stickstoff bei 80°C eine Mischung von 177 g trockenem Polypropylenglykol MW=2000 (Desmophen® 1900 U), 0,9 g Trimethylolpropan und 0,1 ml Dibutylzinndilaurat zugegeben und während 2 Stunden bei 80°C gerührt. Es bildet sich ein Präpolymer mit einem Isocyanatgehalt von 3,7 Gew.-%.

(B) Verklebung von Stahl/Glas und Haftung auf Glas:

Zu dem Präpolymerenansatz A werden oben beschriebene Haftvermittler zugesetzt und dieses feuchtigkeitshärtende Einkomponenten-Polyurethan zur Verklebung von Stahlprüfkörpern (17x2,5 cm), die eine Ueberlappung von 1,25x2,5 cm aufweisen und als Sandwich einen Glasobjektträger (3,8x2,5 cm) halten verwendet. Ausserdem wird der Klebstoff auf eine Glasplatte aufgetragen, die nach einer Härtzeit von zwei Wochen vier Wochen in Wasser bei Raumtemperatur gelagert wird. Die Ergebnisse sind in der folgenden Tabelle zusammengestellt:

| Ansatz-Nr. | Haftvermittler gemäss Beispiel Nr. | (g) | Stahl/Glas Zugscherf. ($N/mm^2$) | Bruchtyp * | Glashaftung ** |
|---|---|---|---|---|---|
| (Präpol) | – | – | 0,6 | A | – |
| | 4 | (9) | 1,4 | K | + |
| | 5 | (9) | 1,5 | K | + |
| | 6 | (9) | 1,2 | K | + |

*) Bruchtyp: A = Adhäsionsbruch, K = Kohäsionsbruch
**) Glashaftung: – steht für Polyurethan, das bereits nach kurzer Zeit von der Glasoberfläche abgeogen werden kann, während + manuell nicht zu entfernen war.

Beispiel 9

Es wird ein Präpolymer hergestellt, indem bei 70°C innerhalb einer Stunde 77,67 g trockenes Polypropylenglykol MW = 2000 (Desmophen® 1900 U) zu 21,9 g Methylendiphenyldiisocyanat, das 0,04 ml Dibutyl zinndilaurat enthält, zugegeben werden. Nach Zusatz von 0,39 g Trimethylolpropan wird eine weitere Stunde bei 70°C gerührt und ein Präpolymer mit 3,7 Gew.-% freiem Isocyanat erhalten. Zu diesem Präpolymer wird Haftvermittler zugegeben und das so modifizierte Einkomponentenpolyurethan auf verschiedene Materialien aufgetragen. Die Ansätze sind in der folgenden Tabelle zusammengestellt, wobei + anzeigt, dass manuell eine Abtrennung der geärteten Polyurethanschicht vom Substrat nicht möglich war als qualitatives Mass für die Haftung.

| | Haftvermittler gemäss Beispiel Nr. | Gew.-% | ABS | PA | PC | PP | PVC | SMC | Stahl | Al | G | SG |
|---|---|---|---|---|---|---|---|---|---|---|---|---|
| (Präpol.) | – | – | – | – | + | – | – | + | – | – | – | – |
| | 4 | (4,3) | + | + | + | – | + | + | + | + | + | + |
| | 6 | (4,1) | + | + | + | – | + | + | + | – | + | + |

ABS: Acrylnitril-Butadien-Styrol
PA: Polyamid
PC: Polycarbonat
PP: Polypropylen
PVC: Polyvinylchlorid
SMC: Glasverstärkter Polyester
G: Glas
SG: Sicherheitsglas

**Patentansprüche für die Vertragsstaaten CH, DE, FR, GB, IT, LI, NL, SE**

1. Verbindungen der allgemeinen Formel I

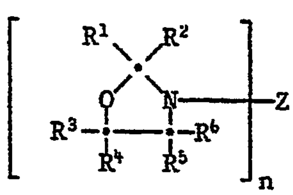

(I),

worin
$R^1$ Wasserstoff, $C_1$-$C_{12}$-Alkyl, $C_5$-$C_7$-Cycloalkyl, Phenyl oder Benzyl ist und
$R^2$ Wasserstoff oder $C_1$-$C_4$-Alkyl bedeutet, oder
$R^1$ und $R^2$ zusammen mit dem C-Atom, an welches sie gebunden sind einen 5- oder 6-gliedrigen Ring bilden, und $R^3$, $R^4$, $R^5$ und $R^6$ gleich oder verschieden sind und Wasserstoff, $C_1$-$C_{12}$-Alkyl, unsubstituiertes oder mit 1-3 $C_1$-$C_4$-Alkyl, Halogen oder $C_1$-$C_4$-Alkoxy substituiertes Phenyl oder eine Gruppe der Formel $-CH_2OR^7$ (II) bedeuten, wobei $R^7$ $C_1$-$C_{12}$-Alkyl, unsubstituiertes oder mit 1-3 $C_1$-$C_4$-Alkyl, Halogen oder $C_1$-$C_4$-Alkoxy substituiertes Phenyl oder -C(O)-$R^8$ ist, und $R^8$ $C_1$-$C_{12}$-Alkyl bedeutet, und fer-

ner höchstens zwei der Reste $R^3$, $R^4$, $R^5$ und $R^6$ eine oder zwei Gruppen der Formel $-CH_2CH_2Si(OR^9)_3$ (III), $-CH_2OC(O)CH_2CH_2Si(OR^9)_3$ (IV), $-CH_2O(C_mH_{2m})Si(OR^9)_3$ (V) oder

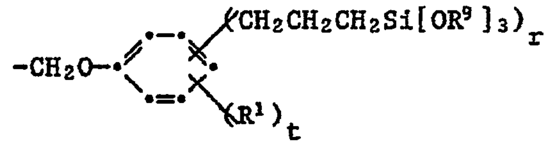 (VI)

bedeuten, wobei

$R^9$ $C_1$-$C_4$-Alkyl oder Phenyl ist und m eine Zahl 1 bis 8 und r eine Zahl 1 oder 2, sowie t 0, 1 oder 2 bedeuten, und ausserdem Verbindungen der Formel I, worin $R^4$ und $R^5$ zusammen eine Gruppe der Formel

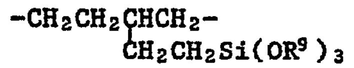 (VII)

ergeben, worin $R^9$ die oben angegebene Bedeutung hat, und $R^3$ und $R^6$ für diesen Fall Wasserstoff bedeuten, und
n 1 oder 2 bedeutet, und
Z, falls n 1 ist, ein organischer Rest ist, der sich von einem primären Amin $ZNH_2$ ableitet und gegebenenfalls eine oder zwei Gruppen $-Si(OR^9)_3$ enthält und
Z, falls n 2 ist, ein zweiwertiger organischer Rest ist, der sich von einem diprimären Diamin $H_2NZNH_2$ ableitet; mit der Massgabe, dass die Verbindungen der Formel I eine bis drei Gruppen $-Si(OR^9)$ enthalten.

2. Verbindungen gemäss Anspruch 1 der Formel I, worin Z falls n 1 ist von einem aliphatischen, cycloaliphatischen, aliphatisch/aromatischen, aromatischen oder heterocyclischen primären Amin abgeleitet ist, wobei dieser geradkettige oder verzweigte Rest Z gegebenenfalls eine oder mehrere Ester-, Ether-, Urethan-, Thiourethan-, Aldimin- oder Ketimin-Funktionen enthalten kann.

3. Verbindungen gemäss Anspruch 1 der Formel I, worin Z, falls n 1 ist, von einem aliphatischen oder gemischt aliphatisch/aromatischen primären Amin abgeleitet ist, wobei dieser Rest Z gegebenenfalls gesamthaft eine oder zwei Ester-, Ether-, Urethan-, Thiourethan-, Aldimin- oder Ketimin-Funktionen enthält oder von einem aromatischen Amin abgeleitet ist.

4. Verbindungen gemäss Anspruch 1 der Formel I, worin n 1 ist.

5. Verbindungen gemäss Anspruch 4 der Formel I, worin Z eine Gruppe der Formel
$-(C_mH_{2m})-Si(OR^9)_3$ (VIII) bedeutet.

6. Verbindungen gemäss Anspruch 4 der Formel I, worin Z eine Gruppe der Formel
$-[(R^{10})C(R^{11})]_u-O-R^{12}$ (IX), $-(R^{10})C(R^{11})-C(O)O(CH_2)_3Si(OR^9)_3$ (X) bedeuten, worin u 2, 3 oder 4 bedeutet, und
$R^{10}$ und $R^{11}$ Wasserstoff oder Methyl sind, und $R^{12}$ eine Gruppe der Formel $-(C_mH_{2m})-Si(OR^9)_3$ (XI), $-C(O)CH_2CH_2Si(OR^9)_3$ (XII), $-C(O)NH-(C_mH_{2m})-Si(OR^9)_3$, (XIII),

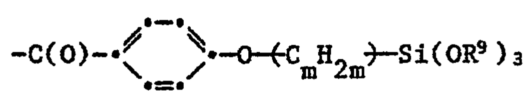 (XIV),

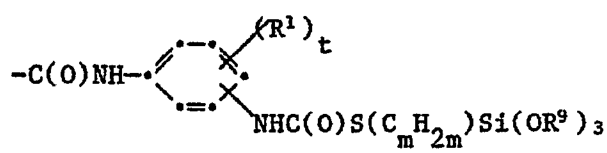 (XV) oder

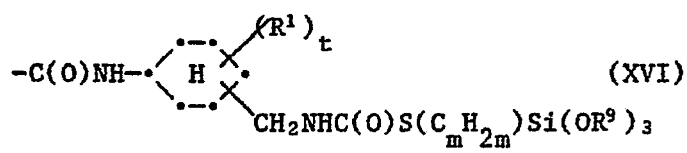 (XVI)

bedeutet, wobei die Symbole m, t, $R^1$ und $R^9$ die in Anspruch 1 angegebene Bedeutung haben.

7. Verbindungen gemäss Anspruch 4 der Formel I, worin Z eine Gruppe der Formel
$-[(R^{10})C(R^{11})]_u-OR^7$ (XVII)
bedeutet, worin u, $R^{10}$ und $R^{11}$ die in Anspruch 6 und $R^7$ die in Anspruch 1 angegebene Bedeutung haben.

8. Verbindungen gemäss Anspruch 1 der Formel I, worin n 2 ist.

9. Verbindungen gemäss Anspruch 8 der Formel, worin Z ein zweiwertiger aliphatischer, cycloaliphatischer, aromatischer oder heterocyclischer Rest ist, der sich von einem diprimären Diamin $H_2NZNH_2$ (VIII) ableitet.

10. Verbindungen gemäss Anspruch 1 der Formel I, worin $R^1$ und $R^2$ unabhängig voneinander Wasserstoff oder $C_1$-$C_4$-Alkyl bedeuten.

11. Verbindungen gemäss Anspruch 1 der Formel I, worin $R^3$, $R^4$, $R^5$ und $R^6$ Wasserstoff oder $C_1$-$C_4$-Alkyl und höchstens zwei dieser Reste Phenoxymethyl bedeuten.

12. Verbindungen gemäss Anspruch 1 der Formel I, worin $R^3$ und $R^6$ Wasserstoff und $R^4$ und $R^5$ Wasserstoff oder Methyl bedeuten.

13. Verbindungen gemäss Anspruch 1 der Formel I, worin einer der Reste $R^3$, $R^4$, $R^5$ oder $R^6$ eine Gruppe der Formeln (III), (IV), (V) oder (VI) bedeutet.

14. Verbindungen gemäss Anspruch 1 der Formel I, worin $R^4$ und $R^5$ zusammen eine Gruppe der Formel VII bedeuten und $R^3$ und $R^6$ Wasserstoff sind.

15. Verbindungen gemäss Anspruch 1 der Formel I, welche im Molekül eine oder zwei Gruppen -$Si(OR^9)_3$ enthalten.

16. Verbindungen gemäss Anspruch 4 der Formel I, welche eine Gruppe -$Si(OR^9)_3$ im Substituenten Z enthalten.

17. Verbindungen gemäss Anspruch 4 der Formel I, welche eine Gruppe -$Si(OR^9)_3$ im Substituenten Z und eine Gruppe -$Si(OR^9)_3$ in einem der Reste $R^3$, $R^4$, $R^5$ oder $R^6$ enthalten.

18. Verbindungen gemäss Anspruch 4 der Formel I, welche eine oder zwei Gruppen -$Si(OR^9)_3$ in einem der Substituenten $R^3$, $R^4$, $R^5$ oder $R^6$ enthalten.

19. Verbindungen gemäss Anspruch 8 der Formel I, welche insgesamt zwei Gruppen -$Si(OR^9)_3$ enthalten.

20. Feuchtigkeitshärtende Epoxid- oder Polyurethanharze, enthaltend mindestens eine Verbindung der Formel I gemäss Anspruch 1.

21. Polyurethanharz gemäss Anspruch 20.

22. Harze gemäss Anspruch 20, enthaltend 0,1-20 Gew.% einer Verbindung der Formel I.

**Patentansprüche für den Vertragsstaat: ES**

1. Feuchtigkeitshärtende Epoxid- oder Polyurethanharze, enthaltend mindestens eine Verbindung der allgemeinen Formel I

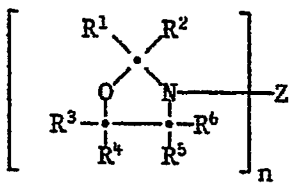

(I),

worin
$R^1$ Wasserstoff, $C_1$-$C_{12}$-Alkyl, $C_5$-$C_7$-Cycloalkyl, Phenyl oder Benzyl ist und
$R^2$ Wasserstoff oder $C_1$-$C_4$-Alkyl bedeutet, oder
$R^1$ und $R^2$ zusammen mit dem C-Atom, an welches sie gebunden sind einen 5- oder 6-gliedrigen Ring bilden, und $R^3$, $R^4$, $R^5$ und $R^6$ gleich oder verschieden sind und Wasserstoff, $C_1$-$C_{12}$-Alkyl, unsubstituiertes oder mit 1-3 $C_1$-$C_4$-Alkyl, Halogen oder $C_1$-$C_4$-Alkoxy substituiertes Phenyl oder eine Gruppe der Formel -$CH_2OR^7$ (II) bedeuten, wobei $R^7$ $C_1$-$C_{12}$-Alkyl, unsubstituiertes oder mit 1-3 $C_1$-$C_4$-Alkyl, Halogen oder $C_1$-$C_4$-Alkoxy substituiertes Phenyl oder -C(O)-$R^8$ ist, und $R^8$ $C_1$-$C_{12}$-Alkyl bedeutet, und ferner höchstens zwei der Reste $R^3$, $R^4$, $R^5$ und $R^6$ eine oder zwei Gruppen der Formel -$CH_2CH_2Si(OR^9)_3$ (III), -$CH_2OC(O)CH_2CH_2Si(OR^9)_3$ (IV), -$CH_2O(C_mH_{2m})Si(OR^9)_3$ (V) oder

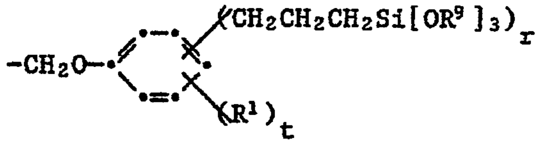

(VI)

bedeuten, wobei

$R^9$ $C_1$-$C_4$-Alkyl oder Phenyl ist und m eine Zahl 1 bis 8 und r eine Zahl 1 oder 2, sowie t, 0, 1 oder 2 bedeuten und ausserdem Verbindungen der Formel I, worin $R^4$ und $R^5$ zusammen eine Gruppe der Formel

$$-CH_2CH_2CHCH_2- \quad (VII)$$
$$CH_2CH_2Si(OR^9)_3$$

ergeben, worin $R^9$ die oben angegebene Bedeutung hat, und $R^3$ und $R^4$ für diesen Fall Wasserstoff bedeuten, und
n 1 oder 2 bedeutet, und
Z, falls n 1 ist, ein organischer Rest ist, der sich von einem primären Amin $ZNH_2$ ableitet und gegebenenfalls eine oder zwei Gruppen $-Si(OR^9)_3$ enthält und
Z, falls n 2 ist, ein zweiwertiger organischer Rest ist, der sich von einem diprimären Diamin $H_2NZNH_2$ ableitet; mit der Massgabe, dass die Verbindungen der Formel I eine bis drei Gruppe $-Si(OR^9)_3$ enthalten.

2. Harze gemäss Anspruch 1, enthaltend mindestens eine Verbindung gemäss Anspruch 1 der Formel I, worin Z falls n 1 ist von einem aliphatischen, cycloaliphatischen, aliphatisch/ aromatischen, aromatischen oder heterocyclischen primären Amin abgeleitet ist, wobei dieser geradkettige oder verzweigte Rest Z gegebenenfalls eine oder mehrere Ester-, Ether-, Urethan-, Thiourethan-, Aldimin- oder Ketimin-Funktionen enthalten kann.

3. Harze gemäss Anspruch 1, enthaltend mindestens eine Verbindung gemäss Anspruch 1 der Formel I, worin Z, falls n 1 ist, von einem aliphatischen oder gemischt aliphatisch/aromatischen primären Amin abgeleitet ist, wobei dieser Rest Z gegebenenfalls gesamthaft eine oder zwei Ester-, Ether-, Urethan-, Thiourethan-, Aldimin- oder Ketimin-Funktionen enthält oder von einem aromatischen Amin abgeleitet ist.

4. Harze gemäss Anspruch 1, enthaltend mindestens eine Verbindung gemäss Anspruch 1 der Formel I, worin n 1 ist.

5. Harze gemäss Anspruch 1, enthaltend mindestens eine Verbindung gemäss Anspruch 4 der Formel I, worin Z eine Gruppe der Formel $-(C_mH_{2m})-Si(OR^9)_3$ (VIII) bedeutet.

6. Harze gemäss Anspruch 1, enthaltend mindestens eine Verbindung gemäss Anspruch 4 der Formel I, worin Z eine Gruppe der Formel $-[(R^{10})C(R^{11})]_u-O-R^{12}$ (IX), $-(R^{10})C(R^{11})-C(O)O(CH_2)_3Si(OR^9)_3$ (X) bedeutet, worin u 2, 3 oder 4 bedeutet, und
$R^{10}$ und $R^{11}$ Wasserstoff oder Methyl sind, und $R^{12}$ eine Gruppe der Formel $-(C_mH_{2m})-S(OR^9)_3$ (XI), $-C(O)CH_2CH_2Si(OR^9)_3$ (XII), $-C(O)NH-(C_mH_{2m})-S(OR^9)_3$ (XIII),

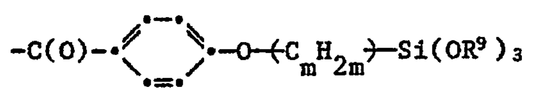 (XIV),

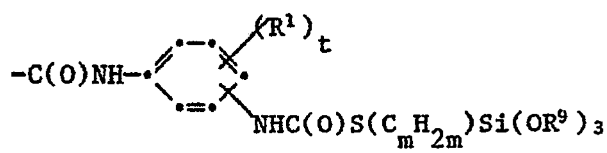 (XV) oder

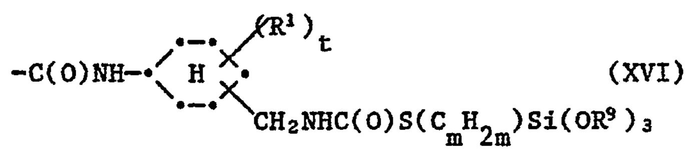 (XVI)

bedeutet, wobei die Symbole, m, t, $R^1$ und $R^9$ die in Anspruch 1 angegebene Bedeutung haben.

7. Harze gemäss Anspruch 1, enthaltend mindestens eine Verbindung gemäss Anspruch 4 der Formel I, worin Z eine Gruppe der Formel
$-[(R^{10})C(R^{11})]_u-OR^7$ (XVII)
bedeutet, worin u, $R^{10}$ und $R^{11}$ die in Anspruch 6 und $R^7$ die in Anspruch 1 angegebene Bedeutung haben.

8. Harze gemäss Anspruch 1, enthaltend mindestens eine Verbindung gemäss Anspruch 1 der Formel I, worin n 2 ist.

9. Harze gemäss Anspruch 1, enthaltend mindestens eine Verbindung gemäss Anspruch 8 der Formel I, worin Z ein zweiwertiger aliphatischer, cycloaliphatischer, aromatischer oder heterocyclischer Rest ist, der sich von einem diprimären Diamin $H_2NZNH_2$ (VIII) ableitet.

10. Harze gemäss Anspruch 1, enthaltend mindestens eine Verbindung gemäss Anspruch 1 der Formel I, worin $R^1$ und $R^2$ unabhängig voneinander Wasserstoff oder $C_1$-$C_4$-Alkyl bedeuten.

11. Harze gemäss Anspruch 1, enthaltend mindestens eine Verbindung gemäss Anspruch 1 der Formel I, worin $R^3$, $R^4$, $R^5$ und $R^6$ Wasserstoff oder $C_1$-$C_4$-Alkyl und höchstens zwei dieser Reste Phenoxymethyl bedeuten.

12. Harze gemäss Anspruch 1, enthaltend mindestens eine Verbindung gemäss Anspruch 1 der Formel I, worin $R^3$ und $R^6$ Wasserstoff und $R^4$ und $R^5$ Wasserstoff oder Methyl bedeuten.

13. Harze gemäss Anspruch 1, enthaltend mindestens eine Verbindung gemäss Anspruch 1 der Formel I, worin einer der Reste $R^3$, $R^4$, $R^5$ oder $R^6$ eine Gruppe der Formeln (III), (IV), (V) oder (VI) bedeutet.

14. Harze gemäss Anspruch 1, enthaltend mindestens eine Verbindung gemäss Anspruch 1 der Formel I, worin $R^4$ und $R^5$ zusammen eine Gruppe der Formel VII bedeuten und $R^3$ und $R^6$ Wasserstoff sind.

15. Harze gemäss Anspruch 1, enthaltend mindestens eine Verbindung gemäss Anspruch 1 der Formel I, welche im Molekül eine oder zwei Gruppe $-Si(OR^9)_3$ enthalten.

16. Harze gemäss Anspruch 1, enthaltend mindestens eine Verbindung gemäss Anspruch 4 der Formel I, welche eine Gruppe $-Si(OR^9)_3$ im Substituenten Z enthalten.

17. Harze gemäss Anspruch 1, enthaltend mindestens eine Verbindung gemäss Anspruch 4 der Formel I, welche eine Gruppe $-Si(OR^9)_3$ im Substituenten Z und eine Gruppe $-Si(OR^9)_3$ in einem der Reste $R^3$, $R^4$, $R^5$ oder $R^6$ enthalten.

18. Harze gemäss Anspruch 1, enthaltend mindestens eine Verbindung gemäss Anspruch 4 der Formel I, welche eine oder zwei Gruppen $-Si(OR^9)_3$ in einem der Substituenten $R^3$, $R^4$, $R^5$ oder $R^6$ enthalten.

19. Harze gemäss Anspruch 1, enthaltend mindestens eine Verbindung gemäss Anspruch 8 der Formel I, welche insgesamt zwei Gruppen $-Si(OR^9)_3$ enthalten.

20. Polyurethanharz gemäss Anspruch 1.

21. Harze gemäss Anspruch 1, enthaltend 0,1-20 Gew.% einer Verbindung der Formel I.

**Claims for the contracting States CH, DE, FR, GB, IT, LI, NL, SE**

1. A compound of the general formula I

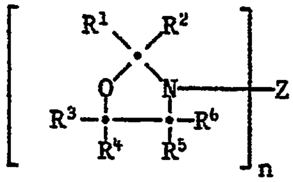

(I),

in which $R^1$ is hydrogen, $C_1$–$C_{12}$alkyl, $C_5$–$C_7$cycloalkyl, phenyl or benzyl and $R^2$ is hydrogen or $C_1$–$C_4$alkyl, or $R^1$ and $R^2$, together with the C atom to which they are attached, form a 5-membered or 6-membered ring, and $R_3$, $R_4$, $R_5$ and $R_6$ are identical or different and are hydrogen, $C_1$–$C_{12}$alkyl, phenyl which is unsubstituted or monosubstituted to trisubstituted by $C_1$–$C_4$alkyl, halogen or $C_1$–$C_4$alkoxy, or is a group of the formule $-CH_2OR^7$ (II) in which $R^7$ is $C_1$–$C_{12}$alkyl, phenyl which is unsubstituted or monosubstituted to trisubstituted by $C_1$–$C_4$alkyl, halogen or $C_1$–$C_4$alkoxy, or is $-C(O)-R^8$, and $R^8$ is $C_1$–$C_{12}$alkyl, and also not more than two of the radicals $R_3$, $R_4$, $R_5$ and $R_6$ are one or two groups of the formula $-CH_2CH_2Si(OR^9)_3$(III), $-CH_2OC(O)CH_2CH_2Si(OR^9)_3$ (IV), $-CH_2O(C_mH_{2m})$ $si(OR^9)_3$ (V) or

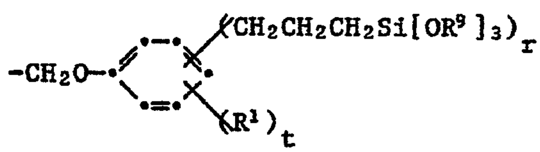

(VI)

in which $R^9$ is $C_1$–$C_4$alkyl or phenyl and m is a number from 1 to 8 and r is a number 1 or 2 and t is 0,1 or 2, and, in addition, compounds of the formula I in which $R_4$ and $R_5$ together form a group of the formula

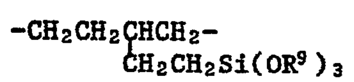

(VII)

in which $R^9$ is as defined above and $R^3$ and $R^6$ in this case are hydrogen and n is 1 or 2 and, if n is 1, Z is an organic radical which is derived from a primary amine $ZNH_2$ and can contain one or two $-Si(OR^9)_3$ groups and, if n is 2, Z is a divalent organic radical derived from a diprimary diamine $H_2NZNH_2$; subject to the proviso that the compounds of the formula I contain one to three $-Si(OR^9)_3$ groups.

2. A compound according to claim 1 of the formula I in which, if n is 1, Z is derived from an aliphatic, cycloaliphatic, aliphatic/aromatic, aromatic or heterocyclic primary amine, it being possible for this linear or branched radical Z to contain, if appropriate, one or more ester, ether, urethane, thiourethane, aldimine or ketimine groups.

3. A compound according to claim 1 of the formula I in which, if n is 1, Z is derived from an aliphatic, or mixed aliphatic/aromatic, primary amine, this radical Z containing, if appropriate, a total of one or two ester, ether, urethane, thiourethane, aldimine or ketimine groups, or being derived from an aromatic amine.

4. A compound according to claim 1 of the formula I in which n is 1.

5. A compound to claim 4 of the formula I in which Z is a group of the formula
$-(C_mH_{2m})-Si(OR^9)_3$ (VIII)

6. A compound according to claim 4 of the formula I in which Z is a groupe of the formula
$-[(R^{10})C(R^{11})]_u-O-R^{12}$ (IX)

$-(R^{10})C(R^{11})-C(O)O(CH_2)_3Si(OR^9)_3$
in which u is 2, 3 or 4 and $R^{10}$ and $R^{11}$ are hydrogen or methyl and $R^{12}$ is a group of the formula
$-(C_mH_{2m})-Si(OR^9)_3$ (XI)

$-C(O)CH_2CH_2Si(OR^9)_3$ (XII)

$-C(O)NH-(C_mH_{2m})-Si(OR^9)_3$ (XIII)

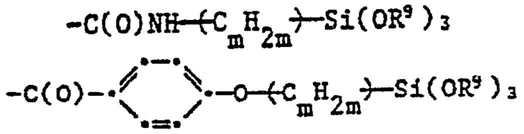 (XIV)

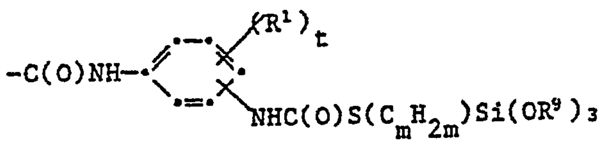 (XV) or

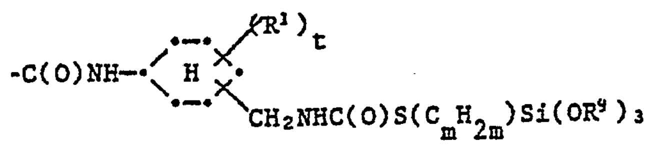 (XVI)

in which the symbols m, t, $R^1$ and $R^9$ are as defined in claim 1.

7. A compound according to claim 4 of the formula I in which Z is a group of the formula
$-[(R^{10})C(R^{11})]_u-OR^7$
in which u, $R^{10}$ and $R^{11}$ are as defined in claim 6 and $R^7$ is as defined in claim 1.

8. A compound according to claim 1 of the formula I in which n is 2.

9. A compound according to claim 8 of the formula I in which Z is a divalent aliphatic, cycloaliphatic, aromatic or heterocyclic radical derived from a diprimary diamine $H_2NZNH_2$ (VIII).

10. A compound according to claim 1 of the formula I in which $R^1$ and $R^2$ independently of one another are hydrogen or $C_1$–$C_4$alkyl.

11. A compound according to claim 1 of the formula I in which $R^3$, $R^4$, $R^5$ and $R^6$ are hydrogen or $C_1$–$C_4$alkyl, and not more than two of these radicals are phenoxymethyl.

12. A compound according to claim 1 of the formula I in which $R^3$ and $R^6$ are hydrogen and $R^4$ and $R^5$ are hydrogen or methyl.

13. A compound according to claim 1 of the formula I in which one of the radicals $R^3$, $R^4$, $R^5$ or $R^6$ is a group of the formulae (III), (IV), (V) or (IV).

14. A compound according to claim 1 of the formula I in which $R^4$ and $R^5$ together are a group of the formula VII, and $R^3$ and $R^6$ are hydrogen.

15. A compound according to claim 1 of the formula I which contains one or two $-Si(OR^9)_3$ groups in its molecule.

16. A compound according to claim 4 of the formula I which contains an $-Si(OR^9)_3$ group in the substituent Z.

17. A compound according to claim 4 of the formula I which contains an $-Si(OR^9)_3$ group in the substituent Z and an $-Si(OR^9)_3$ group in one of the radicals $R^3$, $R^4$, $R^5$ or $R^6$.

18. A compound according to claim 4 of the formula I which contains one or two $-Si(OR^9)_3$ groups in one of the substituents $R^3$, $R^4$, $R^5$ or $R^6$.

19. A compound according to claim 8 of the formula I which contains a total of two $-Si(OR^9)_3$ groups.

20. A moisture-curing epoxide or polyurethane resin containing at least one compound of the formula I according to claim 1.

21. A polyurethane resin according to claim 20.

22. A resin according to claim 20, containing 0.1 – 20% by weight of a compound of the formula I.

**Claims for the contracting State ES**

1. A moisture-curing epoxide or polyurethane resin containing at least one compound of the general formula I

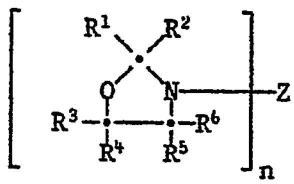 (I),

in which $R^1$ is hydrogen, $C_1$-$C_{12}$alkyl, $C_5$-$C_7$cycloalkyl, phenyl or benzyl and $R^2$ is hydrogen or $C_1$–$C_4$alkyl, or $R^1$ and $R^2$, together with the C atom to which they are attached, form a 5-membered or 6-membered ring, and $R^3$, $R^4$, $R^5$ and $R^6$ are identical or different and are hydrogen, $C_1$–$C_{12}$alkyl, phenyl which is unsubstituted or monosubstituted to trisubstituted by $C_1$–$C_4$alkyl, halogen or $C_1$–$C_4$alkoxy, or is a group of the formula $-CH_2OR^7$ (II) in which $R^7$ is $C_1$–$C_{12}$alkyl, phenyl which is unsubstituted or monosubstituted to trisubstituted by $C_1$–$C_4$alkyl, halogen or $C_1$–$C_4$alkoxy, or is $-C(O)$-$R^8$, and $R^8$ is $C_1$–$C_{12}$alkyl, and also not more than two of the radicals $R^3$, $R^4$, $R^5$ and $R^6$ are one or two groups of the formula $-CH_2CH_2Si(OR^9)_3$ (III), $-CH_2OC(O)CH_2CH_2Si(OR^9)_3$ (IV), $-CH_2O(C_mH_{2m})Si(OR^9)_3$ (V) or

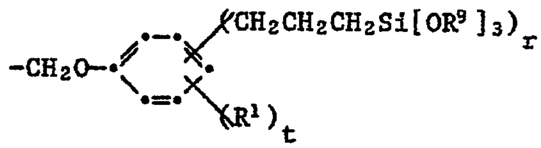 (VI)

in which $R^9$ is $C_1$–$C_4$alkyl or phenyl and m is a number from 1 to 8 and r is a number 1 or 2 and t is 0, 1 or 2, and, in addition, compounds of the formula I in which $R^4$ and $R^5$ together form a group of the formula

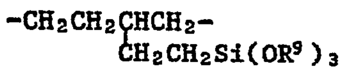 (VII)

in which $R^9$ is as defined above and $R^3$ and $R^6$ in this case are hydrogen and n is 1 or 2 and, if n is 1, Z is an organic radical which is derived from a primary amine $ZNH_2$ and can contain one or two $-Si(OR^9)^3$ groups and, if n is 2, Z is a divalent organic radical derived from a diprimary diamine $H_2NZNH_2$; subject to the proviso that the compounds of the formula I contain one to three $-Si(OR^9)_3$ groups.

2. A resin according to claim 1 containing at least one compound according to claim 1 of the formula I in which, if n is 1, Z is derived from an aliphatic, cycloaliphatic, aliphatic/aromatic, aromatic or heterocyclic primary amine, it being possible for this linear or branched radical Z to contain, if appropriate, one or more ester, ether, urethane, thiourethane, aldimine or ketimine groups.

3. A resin according to claim 1 containing at least one compound according to claim 1 of the formula I in which, if n is 1, Z is derived from an aliphatic, or mixed aliphatic/aromatic, primary amine, this radical Z containing, if appropriate, a total of one or two ester, ether, urethane, thiourethane, aldimine or ketimine groups, or being derived from an aromatic amine.

4. A resin according to claim 1 containing at least one compound according to claim 1 of the formula I in which n is 1.

5. A resin according to claim 1 containing at least one compound according to claim 4 of the formula I in which Z is a group of the formula

$-(C_mH_{2m})-Si(OR^9)_3$ (VIII)

6. A resin according to claim 1 containing at least one compound according to claim 4 of the formula I in which Z is a group of the formula

$-[(R^{10})C(R^{11})]_u-O-R^{12}$ (IX)

$-(R^{10})C(R^{11})-C(O)O(CH_2)_3Si(OR^9)_3$ (X)

in which u is 2, 3 or 4 and $R^{10}$ and $R^{11}$ are hydrogen or methyl and $R^{12}$ is a group of the formula

$$-(C_mH_{2m})-Si(OR^9)_3 \quad (XI)$$

$$-C(O)CH_2CH_2Si(OR^9)_3 \quad (XII)$$

$$-C(O)NH-(C_mH_{2m})-Si(OR^9)_3 \quad (XIII)$$

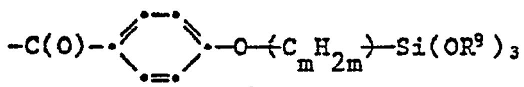

(XIV)

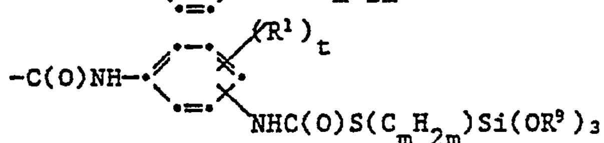

(XV) or

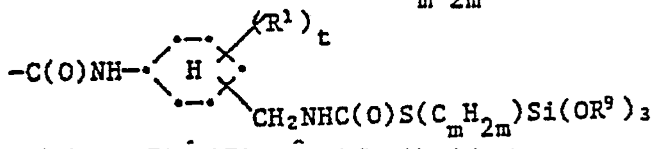

(XVI)

in which the symbols m, t, $R^1$ and $R^9$ are as defined in claim 1.

7. A resin according to claim 1 containing at least one compound according to claim 4 of the formula I in which Z is a group of the formula

$-[(R^{10})C(R^{11})]_u-OR^7$ (XVII)

in which u, $R^{10}$ and $R^{11}$ are as defined in claim 6 and $R^7$ is as defined in claim 1.

8. A resin according to claim 1 containing at least one compound according to claim 1 of the formula I in which n is 2.

9. A compound according to claim 8 of the formula I in which Z is a divalent aliphatic, cycloaliphatic, aromatic or heterocyclic radical derived from a diprimary diamine $H_2NZNH_2$ (VIII).

10. A resin according to claim 1 containing at least one compound according to claim 1 of the formula I in which $R^1$ and $R^2$ independently of one another are hydrogen or $C_1$–$C_4$alkyl.

11. A resin according to claim 1 containing at least one compound according to claim 1 of the formula I in which $R^3$, $R^4$, $R^5$ and $R^6$ are hydrogen or $C_1$–$C_4$alkyl, and not more than two of these radicals are phenoxymethyl.

12. A resin according to claim 1 containing at least one compound according to claim 1 of the formula I in which $R^3$ and $R^6$ are hydrogen and $R^4$ and $R^5$ are hydrogen or methyl.

13. A resin according to claim 1 containing at least one compound according to claim 1 of the formula I in which one of the radicals $R^3$, $R^4$, $R^5$ or $R^6$ is a group of the formulae (III), (IV), (V) or (VI).

14. A resin according to claim 1 containing at least one compound according to claim 1 of the formula I in which $R^4$ and $R^5$ together are a group of the formula VII, and $R^3$ and $R^6$ are hydrogen.

15. A resin according to claim 1 containing at least one compound according to claim 1 of the formula I which contains one or two $-Si(OR^9)_3$ groups in its molecule.

16. A resin according to claim 1 containing at least one compound according to claim 4 of the formula I which contains an $-Si(OR^9)_3$ group in the substituent Z.

17. A resin according to claim 1 containing at least one compound according to claim 4 of the formula I which contains an $-Si(OR^9)_3$ group in the substituent Z and an $-Si(OR^9)_3$ group in one of the radicals $R^3$, $R^4$, $R^5$ or $R^6$.

18. A resin according to claim 1 containing at least one compound according to claim 4 of the formula I which contains one or two $-Si(OR^9)_3$ groups in one of the substituents $R^3$, $R^4$, $R^5$ or $R^6$.

19. A resin according to claim 1 containing at least one compound according to claim 8 of the formula I which contains a total of two $-Si(OR^9)_3$ groups.

20. A polyurethane resin according to claim 1.

21. A resin according to claim 1, containing 0.1–20% by weight of a compound of the formula I.

**Revendications pour les Etats contractants: CH, DE, FR, GB, IT, LI, NL, SE**

1. Composés de formule générale I ci-dessous:

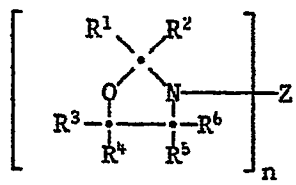

(I),

dans laquelle $R^1$ désigne l'hydrogène ou un groupe alkyle en $C_1$–$C_{12}$, cycloalkyle en $C_5$–$C_7$, phényle ou benzyle et $R_2$ l'hydrogène ou un alkyle en $C_1$–$C_4$, ou bien $R^1$ et $R^2$ forment ensemble et avec l'atome de carbone auquel ils sont liés un cycle pentagonal ou hexagonal, $R^3$, $R^4$, $R^5$ et $R^6$, qui peuvent être identiques ou différents les uns des autres, représentent chacun l'hydrogène, un alkyle en $C_1$–$C_{12}$, un phényle sans substituants ou avec de 1 à 3 alkyles en $C_1$–$C_4$, halogènes ou alcoxy en $C_1$–$C_4$, ou encore un groupe de formule $-CH_2OR^7$ (II), $R^7$ étant un alkyle en $C_1$–$C_{12}$, un phényle sans substituants ou avec de 1 à 3 alkyles en $C_1$–$C_4$, ou un groupe $-C(O)-R^8$, $R^8$ étant un alkyle en $C_1$–$C_{12}$, et par ailleurs parmi $R^3$, $R^4$, $R^5$ et $R^6$, deux d'entre eux au plus, et de préférence un seul, sont des groupes de formule $-CH_2CH_2Si(OR^9)_3$ (III), $-CH_2OC(O)CH_2CH_2Si(OR^9)_3$ (IV), $-CH_2O(C_mH_{2m})Si(OR^9)_3$ (V) ou

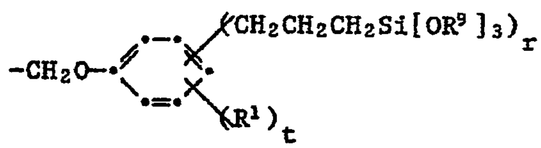

(VI)

$R^9$ étant un alkyle en $C_1$–$C_4$ ou un phényle, m un nombre de 1 à 8, r le nombre 1 ou 2 et t le nombre 0, 1 ou 2, $R_1$ ayant la signification précédemment donnée, ainsi que des composés de formule I ci-dessus dans lesquels $R^4$ et $R^5$ forment ensemble un groupe de formule

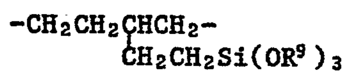

(VII)

$R^9$ ayant la signification précédemment donnée et dans ce cas $R^3$ et $R^6$ étant l'hydrogène, n est le nombre 1 ou 2 et Z, si n = 1, est un radical organique provenant d'une amine primaire $ZNH_2$ et pouvant porter éventuellement un ou deux groupes $-Si(OR^9)_3$, alors que si n = 2, Z est un radical organique divalent provenant d'une diamine diprimaire $H_2NZNH_2$; avec la condition que les composés de formule I comportent de un à trois groupes $-Si(OR^9)_3$.

2. Composés de formule I selon la revendication 1 dans lesquels le radical Z, si n = 1, provient d'une amine primaire aliphatique, cycloaliphatique, araliphatique, aromatique ou hétérocyclique, ce radical Z, qui peut être à chaîne linéaire ou ramifiée, pouvant éventuellement avoir une ou plusieurs fonctions ester, éther, uréthane, thio-uréthane, aldimine ou cétimine.

3. Composés de formule I selon la revendication 1 dans lesquels le radical Z, si n = 1, provient d'une amine primaire aliphatique ou araliphatique et peut avoir éventuellement au total une ou deux fonction ester, éther, uréthane, thio-uréthane, aldimine ou cétimine, ou provient d'une amine aromatique.

4. Composés de formule I selon la revendication 1 dans lesquels n = 1.

5. Composés de formule I selon la revendication 4 dans lesquels Z est un groupe $-(C_mH_{2m})-Si(OR^9)_3$.

6. Composés de formule I selon la revendication 4 dans lesquels Z est un groupe $-[(R^{10})C(R^{11})]_u-O-R^{12}$ (IX) ou $-(R^{10})C(R^{11})-C(O)O(CH_2)_3Si(OR^9)_3$ (X)

u étant le nombre 2, 3 ou 4, $R^{10}$ et $R^{11}$ l'hydrogène ou un méthyle et $R^{12}$ un groupe

$-(C_mH_{2m})-Si(OR^9)_3$ (XI), $-C(O)CH_2CH_2Si(OR^9)_3$ (XII),
$-C(O)NH-(C_mH_{2m})-Si(OR^9)_3$ (XIII),

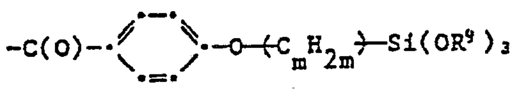 (XIV),

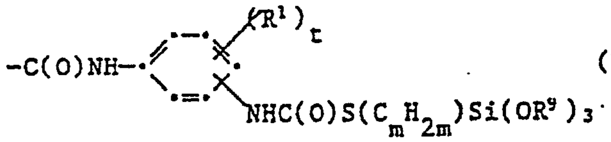 (XV) ou

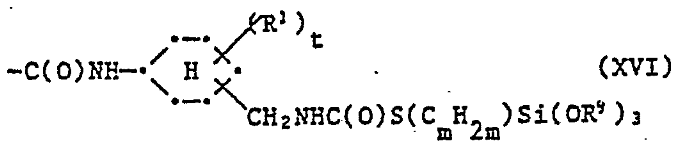 (XVI)

les divers symboles ayant les significations données à la revendication 1.

7. Composés de formule I selon la revendication 4 dans lesquels Z est un groupe
$-[(R^{10})C(R^{11})]_u-OR^7$ (XVII)
u, $R^{10}$ et $R^{11}$ ayant les significations données à la revendication 6 et $R^7$ la signification donnée à la revendication 1.

8. Composés de formule I selon revendication 1 dans lesquels n = 2.

9. Composés de formule I selon la revendication 8 dans lesquels Z est un radical divalent, aliphatique, cycloaliphatique, aromatique ou hétérocyclique, provenant d'une diamine diprimaire $H_2NZNH_2$ (VIII).

10. Composés de formule I selon la revendication 1 dans lesquels $R^1$ et $R^2$ sont chacun, indépendamment l'un de l'autre, l'hydrogène ou un alkyle en $C_1$–$C_4$.

11. Composés de formule I selon la revendication 1 dans lesquels $R^3$, $R^4$, $R^5$ et $R^6$ sont l'hydrogène ou des alkyles en $C_1$–$C_4$ et au plus deux de ces radicaux sont le groupe phénoxyméthyle.

12. Composés de formule I selon la revendication 1 dans lesquels $R^3$ et $R^6$ sont l'hydrogène et $R^4$ et $R^5$ l'hydrogène ou le groupe méthyle.

13. Composés de formule I selon la revendication 1 dans lesquels parmi $R^3$, $R^4$, $R^5$ et $R^6$ l'un est un groupe de formule (III), (IV), (V) ou (VI).

14. Composés de formule I selon la revendication 1 dans lesquels $R^4$ et $R^5$ forment ensemble un groupe de formule (VII) et $R^3$ et $R^6$ sont l'hydrogène.

15. Composés de formule I selon la revendication 1 qui ont un ou deux groupes $-Si(OR^9)_3$.

16. Composés de formule I selon la revendication 4 dont le substituant Z porte un groupe $-Si(OR^9)_3$.

17. Composés de formule I selon la revendication 4 dont le substituant Z porte un groupe $-Si(OR^9)_3$ et l'un des radicaux $R^3$, $R^4$, $R^5$ et $R^6$ porte également un groupe $-Si(OR^9)_3$.

18. Composés de formule I selon la revendication 4 dont l'un des substituants $R^3$, $R^4$, $R^5$ et $R^6$ porte un ou deux groupe $-Si(OR^9)_3$.

19. Composés de formule I selon la revendication 8 qui ont au total deux groupes $-Si(OR^9)_3$.

20. Résines époxydes ou de polyuréthanes durcissant à l'humidité, qui contiennent un ou plusieurs composés de formule I selon la revendication 1.

21. Une résine de polyuréthane selon la revendication 20.

22. Résines selon la revendication 20, qui contiennent de 0,1 à 20% en poids d'un composé de formule

**Revendications pour l'Etat Contractant: ES**

1. Résines époxydes ou de polyuréthanes durcissant à l'humidité, qui contiennent un ou plusieurs composés de formule générale I ci-dessous:

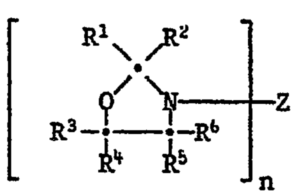 (I),

dans laquelle $R^1$ désigne l'hydrogène ou un groupe alkyle en $C_1$–$C_{12}$, cycloalkyle en $C_5$–$C_7$, phényle ou benzyle et $R^2$ l'hydrogène ou un alkyle en $C_1$–$C_4$, ou bien $R^1$ et $R^2$ forment ensemble et avec l'atome de carbone auquel ils sont liés un cycle pentagonal ou hexagonal, $R^3$, $R^4$, $R^5$ et $R^6$, qui peuvent être identiques ou différents les uns des autres, représentent chacun l'hydrogène, un alkyle en $C_1$–$C_{12}$, un phényle sans substituants ou avec de 1 à 3 alkyles en $C_1$–$C_4$, halogènes ou alcoxy en $C_1$–$C_4$, ou encore un groupe de formule $-CH_2OR^7$ (II), $R^7$ étant un alkyle en $C_1$–$C_{12}$, un phényle sans substituants ou avec de 1 à 3 alkyles en $C_1$–$C_4$, halogènes ou alcoxy en $C_1$–$C_4$ ou un groupe $-C(O)-R^8$, $R^8$ étant un alkyle en $C_1$–$C_{12}$, et par ailleurs parmi $R^3$, $R^4$, $R^5$ et $R^6$, deux d'entre eux au plus, et de préférence un seul sont des groupes de formule $-CH_2CH_2Si(OR^9)_3$ (III), $-CH_2OC(O)CH_2CH_2Si(OR^9)_3$ (IV), $-CH_2O(C_mH_{2m})Si(OR^9)_3$ (V) ou

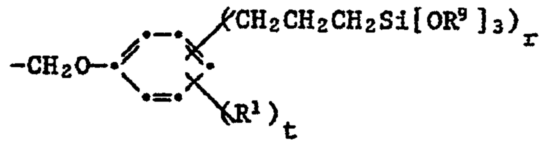

(VI)

$R^9$ étant un alkyle en $C_1$–$C_4$ ou un phényle, m un nombre de 1 à 8, r le nombre 1 ou 2 et t le nombre 0, 1 ou 2, $R_1$ ayant la signification précédemment donnée, ainsi que des composés de formule I ci-dessus dans lesquels $R^4$ et $R^5$ forment ensemble un groupe de formule

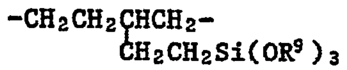

(VII)

$R^9$ ayant la signification précédemment donnée et dans ce cas $R^3$ et $R^6$ étant l'hydrogène, n est le nombre 1 ou 2 et Z, si n = 1, est un radical organique provenant d'une amine primaire $ZNH_2$ et pouvant porter éventuellement un ou deux groupes $-Si(OR^9)_3$, alors que si n = 2, Z est un radical organique divalent provenant d'une diamine diprimaire $H_2NZNH_2$; avec la condition que les composés de formule I comportent de un à trois groupes $-Si(OR^9)_3$.

2. Résines selon la revendication I qui contiennent un ou plusieurs composés de formule I dans lesquels le radical Z, si n = 1, provient d'une amine primaire aliphatique, cycloaliphatique, araliphatique, aromatique ou hétérocyclique, ce radical Z, qui peut être à chaîne linéaire ou ramifiée, pouvant éventuellement avoir une ou plusieurs fonctions ester, éther, uréthane, thio-uréthane, aldimine ou cétimine.

3. Résines selon la revendication qui contiennent un ou plusieurs composés de formule I dans lesquels le radical Z, si n = 1, provient d'une amine primaire aliphatique ou araliphatique et peut avoir éventuellement au total une ou deux fonction ester, éther, uréthane, thio-uréthane, aldimine ou cétimine, ou provient d'une amine aromatique.

4. Résines selon la revendication 1 qui contiennent un ou plusieurs composés de formule I dans lesquels n = 1.

5. Résines selon la revendication 1 qui contiennent un ou plusieurs composés de formule I selon la revendication 4 dans lesquels Z est un groupe $-(C_mH_{2m})-Si(OR^9)_3$ (VIII).

6. Résines selon la revendication 1 qui contiennent un ou plusieurs composés de formule I selon la revendication 4 dans lesquels Z est un groupe

$-[(R^{10})C(R^{11})]_u-O-R^{12}$ (IX) ou $-(R^{10})C(R^{11})-C(O)O(CH_2)_3Si(OR^9)_3$ (X)

u étant le nombre 2, 3 ou 4, $R^{10}$ et $R^{11}$ l'hydrogène ou un méthyle et $R^{12}$ un groupe

$-(C_mH_{2m})-Si(OR^9)_3$ (XI), $-C(O)CH_2CH_2Si(OR^9)_3$ (XII),
$-C(O)NH-(C_mH_{2m})-Si(OR^9)_3$ (XIII),

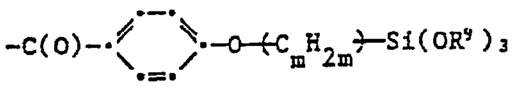 (XIV),

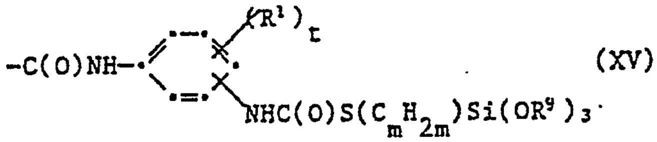 (XV) ou

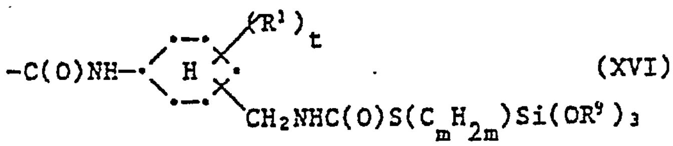 (XVI)

les divers symboles ayant les significations données à la revendication 1.

7. Résines selon la revendication 1 qui contiennent un ou plusieurs composés de formule I selon la revendication 4 dans lesquels Z est un gropue
$-[(R^{10})C(R^{11})]_u-OR^7$ (XVII)
u, $R^{10}$ et $R^{11}$ ayant les significations données à la revendication 6 et $R^7$ la signification donnée à la revendication 1.

8. Résines selon la revendication 1 qui contiennent un ou plusieurs composés de formule I selon revendication 1 dans lesquels n = 2.

9. Résines selon la revendication 1 qui contiennent un ou plusieurs composés de formule I selon la revendication 8 dans lesquels Z est un radical divalent, aliphatique, cycloaliphatique, aromatique ou hétérocyclique, provenant d'une diamine diprimaire $H_2NZNH_2$ (VIII).

10. Résines selon la revendication 1 qui contiennent un ou plusieurs composés de formule I selon la revendication 1 dans lesquels $R^1$ et $R^2$ sont chacun, indépendamment l'un de l'autre, l'hydrogène ou un alkyle en $C_1$–$C_4$.

11. Résines selon la revendication 1 qui contiennent un ou plusieurs composés de formule I selon la revendication 1 dans lesquels $R^3$, $R^4$, $R^5$ et $R^6$ sont l'hydrogène ou des alkyles en $C_1$–$C_4$ et au plus deux de ces radicaux sont le groupe phénoxyméthyle.

12. Résines selon la revendication 1 qui contiennent un ou plusieurs composés de formule I selon la revendication 1 dans lesquels $R^3$ et $R^6$ sont l'hydrogène et $R^4$ et $R^5$ l'hydrogène ou le groupe méthyle.

13. Résines selon la revendication 1 qui contiennent un ou plusieurs composés de formule I selon la revendication 1 dans lesquels parmi $R^3$, $R^4$, $R^5$ et $R^6$ l'un est un groupe de formule (III), (IV), (V) ou (VI).

14. Résines selon la revendication 1 qui contiennent un ou plusieurs composés de formule I selon la revendication 1 dans lesquels $R^4$ et $R^5$ forment ensemble un groupe de formule (VII) et $R^3$ et $R^6$ sont l'hydrogène.

15. Résines selon la revendication 1 qui contiennent un ou plusieurs composés de formule I selon la revendication 1 qui ont un ou deux groupes $-Si(OR^9)_3$.

16. Résines selon la revendication 1 qui contiennent un ou plusieurs composés de formule I selon la revendication 4 dont le substituant Z porte un groupe $-Si(OR^9)_3$.

17. Résines selon la revendication 1 qui contiennent un ou plusieurs composés de formule I selon la revendication 4 dont le substituant Z porte un groupe $-Si(OR^9)_3$ et l'un des radicaux $R^3$, $R^4$, $R^5$ et $R^6$ porte également un groupe $-Si(OR^9)_3$.

18. Résines selon la revendication 1 qui contiennent un ou plusieurs composés de formule I selon la revendication 4 dont l'un des substituants $R^3$, $R^4$, $R^5$ et $R^6$ porte un ou deux groupe $-Si(OR^9)_3$.

19. Résines selon la revendication 1 qui contiennent un ou plusieurs composés de formule I selon la revendication 8 qui ont au total deux groupes $-Si(OR^9)_3$.

20. Une résine de polyuréthane selon la revendication 1.

21. Résines selon la revendication 1, qui contiennent de 0,1 à 20% en poids d'un composé de formule I.